# EUROPEAN PATENT SPECIFICATION

(11) **EP 3 170 109 B1**
(45) Date of publication and mention of the grant of the patent: **02.11.2022**
(21) Application number: 15841406.0
(22) Date of filing: 15.09.2015
(51) Int. Cl.: G06F 16/00, G06F 16/25, G06F 16/27

(54) **METHOD AND SYSTEM FOR ADAPTIVELY BUILDING AND UPDATING COLUMN STORE DATABASE FROM ROW STORE DATABASE BASED ON QUERY DEMANDS**
VERFAHREN UND SYSTEM ZUR ADAPTIVEN ERSTELLUNG UND AKTUALISIERUNG EINER SPALTENORIENTIERTEN DATENBANK AUS EINER ZEILENORIENTIERTEN DATENBANK BASIEREND AUF ABFRAGEANFORDERUNGEN
PROCÉDÉ ET SYSTÈME DE CONSTRUCTION ET DE MISE À JOUR ADAPTATIVES D'UNE BASE DE DONNÉES DE STOCKAGE EN COLONNES À PARTIR D'UNE BASE DE DONNÉES DE STOCKAGE EN LIGNES SUR LA BASE DE DEMANDES D'INTERROGATIONS

(30) Priority: 17.09.2014 US 201414489050
(43) Date of publication of application: 24.05.2017
(60) Divisional application: 22198614.4
(73) Proprietor: Huawei Technologies Co., Ltd., Shenzhen, Guangdong 518129 (CN)
(72) Inventor: HU, Ron-Chung, Palo Alto, CA California 94303 (US); SHI, Guangyu, Shenzhen, Guangdong 518129, (CN); MORTAZAVI, Masood, San Jose, CA California 95129 (US); KU, Chi Yong, San Ramon, CA California 94582 (US); CAO, Fang, San Jose, CA California 95134 (US)
(74) Representative: Körber, Martin Hans
(86) International application number: PCT/CN2015/089574
(87) International publication number: WO 2016/041480

(56) References cited:
- CN-A- 103 440 245
- CN-A- 103 810 219
- US-A1- 2009 240 663
- US-A1- 2013 275 365
- TOBIAS MÜHLBAUER ET AL: "ScyPer : elastic OLAP throughput on transactional data", PROCEEDINGS OF THE SECOND WORKSHOP ON DATA ANALYTICS IN THE CLOUD, DANAC '13, 23 June 2013 (2013-06-23), pages 11-15, XP055389128, New York, New York, USA DOI: 10.1145/2486767.2486770 ISBN: 978-1-4503-2202-7
- ALFONS KEMPER ET AL: "HyPer: A hybrid OLTP&OLAP main memory database system based on virtual memory snapshots", DATA ENGINEERING (ICDE), 2011 IEEE 27TH INTERNATIONAL CONFERENCE ON, IEEE, 11 April 2011 (2011-04-11), pages 195-206, XP031868461, DOI: 10.1109/ICDE.2011.5767867 ISBN: 978-1-4244-8959-6
- BELLO R G ET AL: "Materialized views in Oracle", PROCEEDINGS OF THE INTERNATIONAL CONFERENCE ON VERY LARGEDATA BASES, XX, XX, 24 August 1998 (1998-08-24), pages 659-664, XP002233164,
- MOKRANE BOUZEGHOUB: "A framework for analysis of data freshness", INFORMATION QUALITY IN INFORMATION SYSTEMS, ACM, 2 PENN PLAZA, SUITE 701 NEW YORK NY 10121-0701 USA, 18 June 2004 (2004-06-18), pages 59-67, XP058153817, DOI: 10.1145/1012453.1012464 ISBN: 978-1-58113-902-0
- SHIVNATH BABU ET AL: "Massively Parallel Databases and MapReduce Systems", FOUNDATIONS AND TRENDS IN DATABASES, vol. 5, no. 1, 1 January 2013 (2013-01-01) , pages 1-104, XP055161554, ISSN: 1931-7883, DOI: 10.1561/1900000036

## Description

### CROSS REFERENCE TO RELATED APPLICATIONS

This application claims priority to U.S. Application 14/489,050, entitled "METHOD AND SYSTEM FOR ADAPTIVELY BUILDING AND UPDATING A COLUMN STORE DATABASE FROM A ROW STORE DATABASE BASED ON QUERY DEMANDS" and filed on September 17, 2014.

### BACKGROUND

Based on the storage format of data records, a relational database system can have either row store or column store to save data records. In a row store database, data records are arranged in row format. A row store usually delivers good performance for online transaction processing (OLTP) transactions which often contain INSERT/DELETE/UPDATE operations. For instance, information can be changed for an entire row that involves one disk I/O operation. On the other hand, in a column store database, data records are arranged in column format. A column store delivers good performance for online analytical processing (OLAP) queries, as it need only read those columns necessary to process a query which also significantly reduces disk I/O operations.

Since row store and column store are good for different types of queries, it has been proposed to contain both row store and column store, i.e. hybrid row/column store, in a database system to handle a mixed workload. The goal is to achieve good OLTP performance and output real time (or almost real time) analytic results on a single database system. The common way to build a column store database from a row store database is to extract data records from row store, transform them, and load the data into attribute vectors for respective columns. That is, the column store is built statically before any analytic queries are received or executed. For example, an ETL (Extract-Transform-Load) process is executed during off-peak periods where the database is unavailable for online access in order to transfer the data to the column store database.

However, the typical approach to build a column store database is problematic as it necessarily overbuilds the database to include data that is irrelevant for any subsequent query or queries. In particular, it is often difficult to foresee which queries will be run on the database, and to which data those queries are directed. As such, the column store most likely will be over-built in order to accommodate all potential queries (e.g., building an attribute vector or column for every attribute in the row store database).

In addition, with increasing demand for constant access to database records by customers and companies located around the world, there is probably no good time window long enough to perform an ETL process to transfer data from row store into column store. That is, there are no longer any off-peak periods and not enough time to build a column store database without severely affecting the accessibility of the database system.

Furthermore, traditional hybrid row/column store database systems cannot provide real-time analytics. That is, analytic queries cannot be executed in real time, since the queries must wait for ETL operations to be completed during their scheduled times before query execution.

As such, existing hybrid row/column store database systems still rely on a predictive approach for guessing which attributes will be accessed during execution of queries, and tend to overbuild its column store databases before any query is received or executed. In addition, to facilitate speed of access, these traditional column store databases are built in main memory, such as random access memory (RAM), but will suffer a huge performance penalty during a system crash when the entire column store database is erased. As a result, the system remains down during a system recovery process, wherein the entire column store database is rebuilt.

Thobias Mühlbauer ET AS: "ScyPer : elastic OLAP throughput on transactional data", Proceedings of the Second Workshop on Data Analytics in the Coud, DanaC '13, 23 June 2013 (2013-06-23), pages 11-15, XP055389128, New York, New York, USA, DOI: 10.1145/2486767.2486770, ISBN: 978-1-4503-2202-7 discloses ScyPer, which is a scale-out of the HyPer main memory database system sustaining a superior OLTP throughput of a single HyPer server and providing elastic OLAP throughput by provisioning additional servers on-demand. When a secondary instance is started, it first fetches the latest full database backup from a durable storage and then replays the redo log until it catches up with the primary instance. Mokrane Bouzeghoub et al: "A framework of data freshness", Information Quality in Information Systems, ACM, 2 Penn Plaza, Suite 701 New York, NY 10121-0701 USA, 18 June 2004 (2004-06-18), pages 59-67, XP058153817, DOI: 10.1145/1012453.1012464, ISBN: 978-1-58113-902-0, shows a data integration system DIS in a pull/pull mode. When a user poses a query (pull) the DIS answers it using materialized data stored in an internal repository. Asynchronously, the DIS queries the sources to refresh materialized data. Changes are monitored by the system by accessing logs, querying the sources or comparing successive source snapshots. The update propagation processes are triggered by sources or are executed periodically.

It would be advantageous to build a column store database from a row store database that is not overbuilt for the queries requiring access to data, and that provides real-time query analytic execution.

### SUMMARY

The invention is defined by a computer system according to independent claim 1, a method according to independent claim 7 and a non-transitory computer-readable medium according to claim 14. Additional features of the invention are presented in the dependent claims

In some embodiments of the present invention, a computer system is disclosed. The computer system includes memory having stored therein computer executable instructions, a row store database for storing data, wherein at least row of said row store database comprises a plurality of attributes and a processor executing computer-executable instructions, wherein the processor is configured for adaptively building a column store database from the row store database using queries. The processor is configured for establishing the column store database including data structured to satisfy received analytic queries, the processor is configured for beginning from an initial state of the column store database, for each subsequently received analytic query, importing a targeted amount of data from a corresponding temporal state of the row store database into the column store database to satisfy the subsequently received analytic query; wherein the column store includes a plurality of attribute vectors corresponding to at least one attribute in the row store, wherein each of said plurality of attribute vectors comprises data used to satisfy at least one of a plurality of previously received analytic queries, and wherein each attribute vector includes a pair of information comprising a primary key and a value, wherein the primary key is mappable to a row id and the row id uniquely identifies a corresponding row entry in the row store database. The instructions include receiving a plurality of change transactions directed to the row store, wherein each of the plurality of change transactions are ordered. The instructions further include when a first referenced attribute referenced by a first analytic query corresponds to a first attribute vector in the column store, updating a first attribute vector based on log information corresponding to change transactions directed to the first referenced attribute to satisfy the first analytic query.

In other embodiments, a method for adaptively building and updating a column store database from a row store database using queries is disclosed. The method includes establishing the row store database for storing data, wherein each row of the row store database comprises a plurality of attributes. The method includes establishing the column store database including data structured to satisfy received analytic queries, thereby beginning from an initial state of the column store database, for each subsequently received analytic query, importing a targeted amount of data from a corresponding temporal state of the row store database into the column store database to satisfy the subsequently received analytic query; wherein the column store includes a plurality of attribute vectors corresponding to at least one attribute in the row store, wherein each of said plurality of attribute vectors comprises data used to satisfy at least one of a plurality of previously received analytic queries, and wherein each attribute vector includes a pair of information comprising a primary key and a value, wherein the primary key is mappable to a row id and the row id uniquely identifies a corresponding row entry in the row store database. The method includes receiving a plurality of change transactions directed to the row store, wherein each of the plurality of change transactions are ordered. The method includes when a first referenced attribute referenced by a first analytic query corresponds to a first attribute vector in the column store, updating a first attribute vector based on log information corresponding to change transactions directed to the first referenced attribute to satisfy the first analytic query.

In still other embodiments of the present invention, a non-transitory computer-readable medium having computer-executable instructions for causing a computer system to perform a method for accessing information is disclosed. The method includes establishing the row store database for storing data, wherein each row of the row store database comprises a plurality of attributes. The method includes establishing the column store database including data structured to satisfy received analytic queries, thereby beginning from an initial state of the column store database, for each subsequently received analytic query, importing a targeted amount of data from a corresponding temporal state of the row store database into the column store database to satisfy the subsequently received analytic query; wherein the column store includes a plurality of attribute vectors corresponding to at least one attribute in the row store, wherein each of said plurality of attribute vectors comprises data used to satisfy at least one of a plurality of previously received analytic queries, and wherein each attribute vector includes a pair of information comprising a primary key and a value, wherein the primary key is mappable to a row id and the row id uniquely identifies a corresponding row entry in the row store database. The method includes receiving a plurality of change transactions directed to the row store, wherein each of the plurality of change transactions are ordered. The method includes when a first referenced attribute referenced by a first analytic query corresponds to a first attribute vector in the column store, updating a first attribute vector based on log information corresponding to change transactions directed to the first referenced attribute to satisfy the first analytic query.

These and other objects and advantages of the various embodiments of the present disclosure will be recognized by those of ordinary skill in the art after reading the following detailed description of the embodiments that are illustrated in the various drawing figures.

### BRIEF DESCRIPTION

The accompanying drawings, which are incorporated in and form a part of this specification and in which like numerals depict like elements, illustrate embodiments of the present disclosure and, together with the description, serve to explain the principles of the disclosure.
FIG. 1 is block diagram of a database system including a row store database and a column store database, wherein the column store database is built using an adaptive, just-in-time, and just-enough process, in accordance with one embodiment of the present disclosure.
FIG. 2A is an exemplary illustration of a row entry of the employee table defined above, in accordance with one embodiment of the present disclosure.
FIG. 2B is an illustration of an exemplary attribute vector for the salary attribute of the employee table shown in FIG. 2A, in accordance with one embodiment of the present disclosure.
FIG. 3A is a flow diagram illustrating a method for accessing data from a column store database built from a row store database using an adaptive, just-in-time, and just-enough process, in accordance with one embodiment of the present disclosure.
FIG. 3B is a flow diagram illustrating a method for providing real-time analytical results from a query by dynamically and adaptively building a column store database by importing data that is targeted to satisfy an executing query, in accordance with one embodiment of the present disclosure.
FIG. 4 is an illustration of a B-tree of the employee table, wherein a primary index is used to perform a partial table scan when adaptively building a referenced attribute vector in a column store database, in accordance with one embodiment of the present disclosure.
FIG. 5 is a diagram of an exemplary algorithm implemented for managing metadata indicating what attribute vectors have been built in the column store database, and over what ranges of information are contained within those attribute vectors, in accordance with one embodiment of the present disclosure.
FIGS. 6A-F are illustrations of various examples of comparing covered intervals of an attribute vector to a query range, in accordance with embodiments of the present disclosure.
FIG. 7 is an illustration of a Unified Modeling Language (UML) sequence diagram for dynamically and adaptively building a column store database by importing data that is targeted to satisfy an executing query, in accordance with one embodiment of the present disclosure.
FIG. 8 is block diagram of a database system including a row store database and a column store database, wherein the column store database is built and updated in response to executing analytic queries, in accordance with one embodiment of the present disclosure.
FIG. 9 is a flow diagram illustrating a method for providing real-time analytical results by dynamically and adaptively updating a column store database by importing a targeted amount of data to referenced attribute vectors in order to satisfy an analytic query, in accordance with one embodiment of the present disclosure.
FIG. 10 is an illustration of an explicit change transaction that references at least one attribute vector in a column store database, in accordance with one embodiment of the present disclosure.
FIG. 11 is a data flow diagram illustrating the flow of log information corresponding to change transactions referencing attribute vectors in a column store database, in accordance with one embodiment of the present disclosure.
FIG. 12 is an illustration of a log information format for a column store database, wherein the log information corresponds to a change transaction that references at least one attribute vector in a column store database, in accordance with one embodiment of the present disclosure.
FIG. 13A is an illustration of a Unified Modeling Language (UML) sequence diagram for showing the first stage of updating a column store database involving the storing of log information corresponding to change transactions referencing attribute vectors in the column database, in accordance with one embodiment of the present disclosure.
FIG. 13B is an illustration of a Unified Modeling Language (UML) sequence diagram for showing the second stage of updating a column database involving the application of changes to attribute vectors in the column store database in response to a query, wherein the changes correspond to the previously stored change transactions in stage one, in accordance with one embodiment of the present disclosure.
FIG. 13C is an illustration of an exemplary algorithm implemented for providing real-time analytical results by dynamically and adaptively updating a column store database by importing a targeted amount of data to referenced attribute vectors in order to satisfy an analytic query, in accordance with one embodiment of the present disclosure.
FIG. 14A is a flow diagram illustrating a method for providing real-time analytical results by dynamically and adaptively updating all of the attribute vectors in a column store database in response to executing an analytic query, in accordance with one embodiment of the present disclosure.
FIG. 14B is an illustration of an exemplary algorithm implemented for providing real-time analytical results by dynamically and adaptively updating a column store database by importing all of the change data for attribute vectors in a column store database in order to satisfy an analytic query, in accordance with one embodiment of the present disclosure.

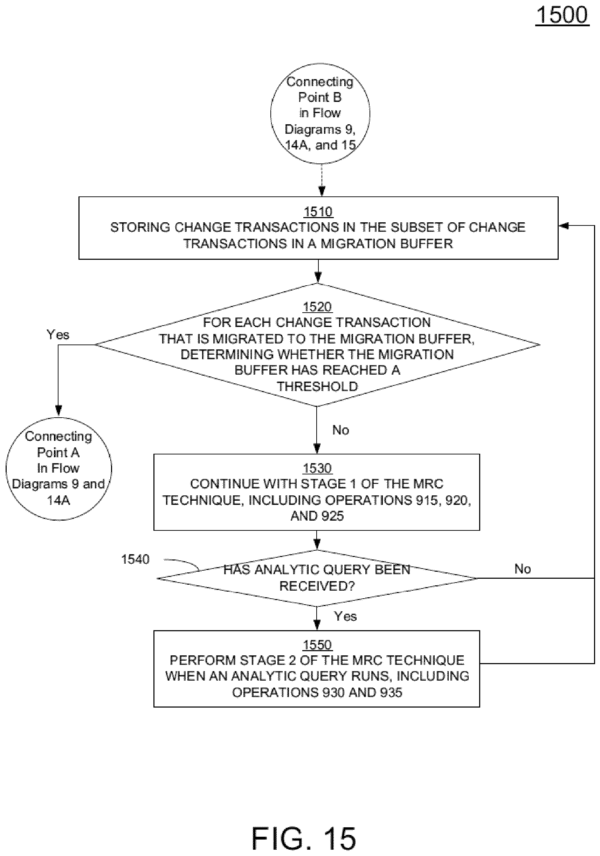

FIG. 15 is a flow diagram illustrating a method for providing real-time analytical results (e.g., through the implementation of the *Migrate Hybrid* migration technique) by dynamically and adaptively updating referenced attribute vectors in a column store database by importing a targeted amount of data to referenced attribute vectors in order to satisfy an analytic query, and by dynamically and adaptively updating all of the attribute vectors in a column store database when a migration buffer containing change transactions from a synchronization point has reached a threshold, in accordance with one embodiment of the present disclosure.

### DETAILED DESCRIPTION

Reference will now be made in detail to the various embodiments of the present disclosure, examples of which are illustrated in the accompanying drawings. While described in conjunction with these embodiments, it will be understood that they are not intended to limit the disclosure to these embodiments. On the contrary, the disclosure is intended to cover alternatives, modifications and equivalents, which may be included within the scope of the disclosure as defined by the appended claims. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Accordingly, embodiments of the present disclosure provide for adaptively building a column store database from a row store database to satisfy an analytic query directed to referenced attribute vectors or columns. Other embodiments of the present disclosure provide for building a column store database from a row store database that is not over-built with data not useful for the analytic queries accessing the database. Still other embodiments of the present disclosure provide for real-time execution of queries using a column store database adaptively built at run time for each of a plurality of received queries. Still other embodiments of the present invention provide for adaptively updating a column store database from a row store database to satisfy an analytic query. Other embodiments provide for just-in-time data consistency for queries running on a column store database by updating the column store database in response to queries. Additionally, other embodiments disclose a hybrid row/column store database in a single database management system, wherein a recovery system does not change the system recovery time over a row store database system because memory copies to the migration buffer of a column store database are made without updating the attribute vectors of the column store database during the system recovery operation.

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer generated step, logic block, process, etc., is here, and generally, conceived to be a self-consistent sequence of steps or instructions leading to a desired result. The steps are those requiring physical manipulations of physical quantities, and refer to the action and processes of a computing system, or the like, including a processor configured to manipulate and transform data represented as physical (electronic) quantities within the computer system's registers and memories into other data similarly represented as physical quantities within the computer system memories or registers or other such information storage, transmission or display devices.

Flowcharts of examples of methods for providing video segmentation are described, according to embodiments of the present invention. Although specific steps are disclosed in the flowcharts, such steps are exemplary. That is, embodiments of the present invention are well-suited to performing various other steps or variations of the steps recited in the flowcharts. Also, embodiments described herein may be discussed in the general context of computer-executable instructions residing on some form of computer-readable storage medium, such as program modules, executed by one or more computers or other devices. By way of example, and not limitation, the software product may be stored in a nonvolatile or non-transitory computer-readable storage media that may comprise non-transitory computer storage media and communication media. Generally, program modules include routines, programs, objects, components, data structures, etc., that perform particular tasks or implement particular abstract data types. The functionality of the program modules may be combined or distributed as desired in various embodiments.

### ADAPTIVELY BUILDING A COLUMN STORE DATABASE FROM A ROW STORE DATABASE BASED ON QUERY DEMANDS

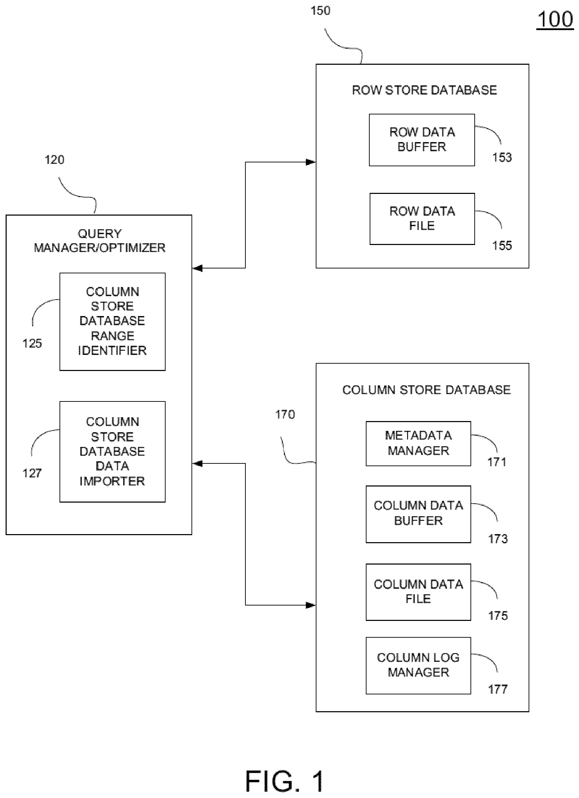

FIG. 1 is block diagram of a database system 100 including a row store database 150 and a column store database 170, wherein the column store database 170 is built using an adaptive, just-in-time, and just-enough process, in accordance with one embodiment of the present disclosure. Specifically, the column store database 170 is built dynamically and progressively at run time for each received analytic query, and wherein the column store database is adaptively built to satisfy each query.

Database system 100 may include a processor and memory, wherein the processor is configured to execute computer-executable instructions stored in the memory, and wherein the processor is configured to build a column store database implementing an adaptive, just-in-time, and just-enough statement based migration process, in accordance with one embodiment of the present disclosure. In one embodiment, the processor is configured to perform the functions of one or more of the example embodiments described and/or illustrated herein, such as the operations performed by query/transaction managers 120, 820, and/or 1350. The processor may be included within a single or multi-processor computing device or system capable of executing computer-readable instructions. In its most basic form, a computing device may include at least one processor and a system memory. System memory is coupled to processor, and generally represents any type or form of volatile or non-volatile storage device or medium capable of storing data and/or other computer-readable instructions. Examples of system memory include, without limitation, RAM, ROM, flash memory, or any other suitable memory device.

For purposes of discussion, a "memory database system" or "main memory database system" refers to a database system including a CPU and "main memory", wherein the main memory is configured to hold all of the data in order to function properly. This is typical of traditional systems used for storing data. For example, a main memory may be comprised of random access memory (RAM). The main memory may be backed up with persistent storage, or with a battery back-up system. For purposes of illustration, a 100 GB main memory database system is configured to store all 100 GB in main memory.

On the other hand, embodiments of the present invention disclose a database system that allows data to be distributed in main memory and persistent storage, taken alone or in combination. For instance, in one embodiment, the majority of the data, if not all, is stored in persistent storage. That is, using the example of the 100 GB storage system, the data is stored in persistent storage, and main memory (e.g., 4 GB) is used for quicker access, such as, through a buffer. In that manner, a laptop is now a suitable medium for storing large amounts of data, whereas traditionally a laptop was unsuitable to be configured with 100 GBs of main memory. In still another embodiment, the data is stored in main memory for normal operation, and with a back-up to persistent storage.

Since row store and column store databases are good for different types of queries, embodiments of the present invention utilize a database system that includes both a row store database and column store database. Specifically, embodiments of the present invention provide for a hybrid row/column store access in a database system 100 to handle a mixed OLTP/OLAP workload. As a result, the hybrid row store and column store database system 100 achieves high OLTP performance, while enjoying real time (or almost real time) analytics result in a mixed workload environment.

As shown in FIG. 1, the database 100 includes a row store database 150. Each row of the row store database 150 includes a plurality of attributes. For example, row store database 150 may be defined as an employee table that includes eight attributes, wherein a table is a collection of records. For illustration, the employee table may include information related to the employees of a company, wherein the information is defined as attributes. A table definition is provided below that defines the attributes of an exemplary employee table, as follows:

```
   CREATE TABLE Employee
   (
        EmpNo int not null primary key,
        Name varchar(127) not null,
        Gender char(1) not null,
        DeptNo int not null,
        StartDate date,
        Title varchar(50) not null,
        Salary Decimal(10,2) null,
        Comment varchar(255) null,
    PRIMARY KEY (EmpNo),
    INDEX (Name),
    INDEX (DeptNo)
   );
```

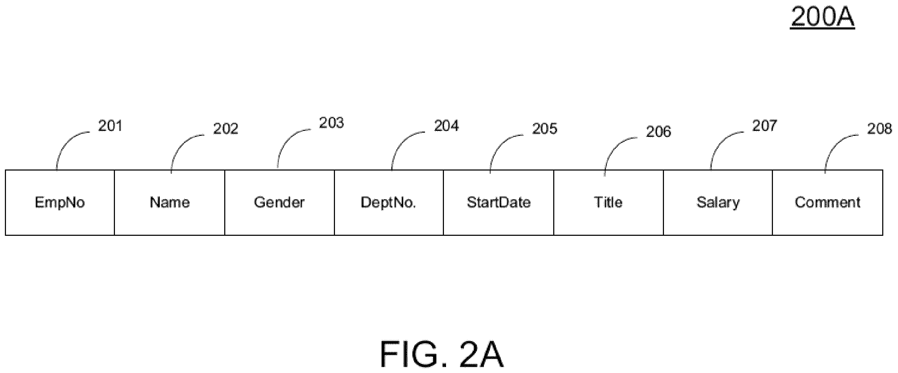

FIG. 2A is an exemplary illustration of a row entry 200A of the employee table defined above, in accordance with one embodiment of the present disclosure. For example, the employee table includes an attribute 201 for employee number, attribute 202 for employee name, attribute 203 for gender, attribute 204 for department number, attribute 205 for start date, attribute 206 for title, attribute 207 for salary, and a attribute 208 for comments.

The row store database 150 includes a row data buffer 153 configured to store data in non-persistent main memory, such as RAM. In addition, the row store database 150 includes a row data file 155, which persistently stores data, such as storing to disk. A row log manager (not shown) manages the updates and changes to the row store database 150.

In one embodiment, the row store database 150 is in a consistent database state. That is, the row store database 150 is current to a temporal point in time. For example, the row store database 150 can be configured as a static collection of data, and provides a snapshot of the data within the database.

In addition, the database system 100 includes a column store database 170 that includes data structured to satisfy received analytic queries. The column store database 170 includes a column data buffer 163 configured to store data in non-persistent main memory, such as RAM. In addition, the column store database 170 includes a column data file 165, which persistently stores data, such as storing to disk. A column store log manager 167 manages the updates and changes to the column store database 170.

In the column store database 170, there exists one attribute vector for each column or attribute that is referenced by any of a plurality of queries accessing the database system 100. The attribute vector includes one pair of information (e.g., *RowID, value*) for each scanned record of a table. The *RowID* uniquely identifies the related row entry that corresponds to the information in the column store database. In another embodiment, a primary key is used to reference row entries in the row store database, wherein the primary key is mappable to a corresponding *RowID.* In one embodiment, the *value* is an abbreviated/encoded internal representation of data that is defined with the help of dictionaries.

The covered range of an attribute vector in the column store database refers to the range of the primary key values, in accordance with one embodiment of the present disclosure. That is, a suitable range of primary key values can be used to define a covered range for any attribute vector. Like *RowID,* the primary key value can also uniquely identify a record. There exists a one-to-one mapping between *RowID* and primary key. For example, in the Employee Table provided above, the primary key is the Employee Number (EmpNo), which can be used to uniquely identify a row entry (e.g., through mapping) of a row store database. Each row entry uniquely corresponds to a different employee. When an analytic query needs to use a table scan operation, the attribute vector of the primary key column is built, even though the primary key is not referenced in a given query. This attribute vector provides mapping between the primary key values and corresponding *RowID* values. For a query involving full table scan operation, the covered range is only one single interval with all the possible values. For a query involving a partial table scan operation over a range of primary key values, then corresponding attribute vectors for the referenced attributes are built with a subset of records covering the range.

More specifically, beginning from an initial state of the column store database, for each subsequently received analytic query, a targeted amount of data is imported from a corresponding temporal state of the row store database into the column store database to satisfy the subsequently received analytic query. A query manager/optimizer 120 is configured to determine the targeted amount of data, if any, that is imported into the column store database 170 from the row store database 150. That is, the query manager/optimizer 120 is configured to determine the most efficient path for executing a query, including which data is referenced by the query. In particular, the query manager/optimizer 120 is configured for receiving a subsequently received analytic query, such as, any one of a sequence of received queries. The identified subsequently received analytic query is directed to a queried range of primary key attributes for a first referenced attribute (e.g., salary) in the plurality of attributes. For example, a query asking for the average salary of male employees with Employee Number greater than 8000 may access two attribute vectors (e.g., gender and salary) over a queried range of the primary key attribute (Employee Number) greater than 8000.

A range identifier 125 in the query manager/optimizer 120 is configured for determining if a covered range of primary key attributes associated with a corresponding attribute vector (e.g., first referenced attribute) of the column store database 120 is within or encompasses the queried range of primary key attributes. In particular, the range identifier 125 communicates with the column store metadata manager 171 to access metadata including state information for the metadata. That is, the metadata includes state information related to what attribute vectors have been built in the column store database 170. More particularly, the metadata includes a covered range (e.g., primary key attributes) corresponding to each attribute vector in the column store database. In that manner, a determination can be made by the query manager/optimizer 120 whether or not the covered range encompasses the queried range to satisfy the query.

When the covered range of primary key attributes, as stored in the column store database 170 for an attribute vector of a first referenced attribute, encompasses the queried range, then no enhancement is necessary, as the data contained within the column store database 170 is sufficient to satisfy the query. That is, the targeted amount of data to be imported is a null set of data, such as, when the column store database includes data that is sufficient to satisfy the query.

On the other hand, when the covered range of primary key attributes as stored in the column store database 170 for an attribute vector of a first referenced attribute does not encompass the queried range, then the covered range is enhanced in order to satisfy the query. In one embodiment, the enhancement includes importing a targeted amount of data that comprises a minimum amount of data, or just-enough data to support and satisfy the currently executing analytic query. Using the example query asking for the average salary of males with Employee Number (EmpNo) greater than 8000, an attribute vector including salary information may include information with Employee Number greater than 9000. In that case, the covered range (the Employee Number greater than 9000) does not encompass the queried range (Employee Number greater than 8000) of the attribute vector for salary. As such, the attribute vector for salary is enhanced with the targeted data so that the covered range of primary key attributes will encompass the queried range of primary key attributes for that referenced attribute. The targeted data that is imported to the column store database includes salary information for Employee Number from 8000 to 9000. More specifically, a data importer 127 of the query manager/optimizer 120 is configured for importing the targeted data from the row store database 150, in the corresponding temporal state, to enhance the covered range for the attribute vector in order to encompass the queried range.

When the covered range of primary key attributes for a referenced attribute is a null set, then the attribute vector for the referenced attribute is built from the row store database. That is, values over the queried range of primary key attributes are used to build the attribute vector for the referenced attribute.

In one embodiment, the targeted amount of data comprises a minimum amount of data, or just-enough data to support and satisfy the currently executing analytic query. In some embodiments, the targeted amount of data is a null set of data, such as, when the column store database includes data that is sufficient to satisfy the query.

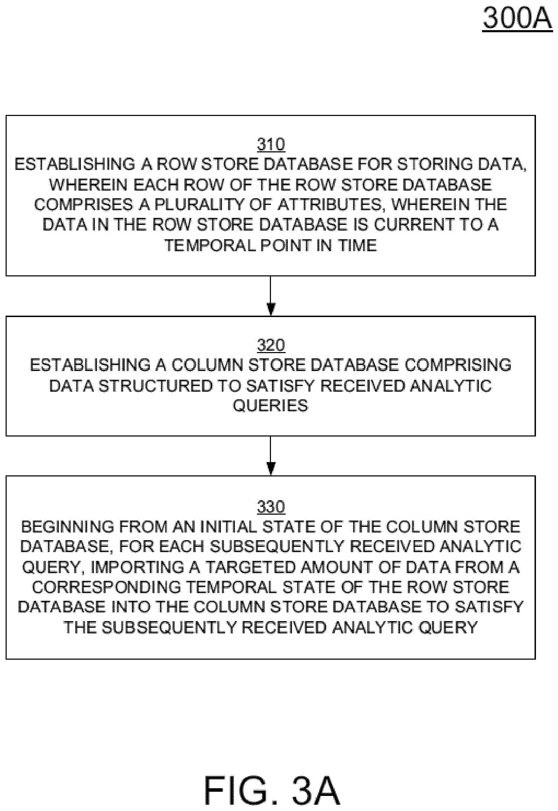

FIG. 3A is a flow diagram 300A illustrating a method for accessing information from a column store database, in accordance with one embodiment of the present disclosure. In one embodiment, flow diagram 300A illustrates a computer implemented method for accessing information from a column store database. In another embodiment, flow diagram 300A is implemented within a computer system including a processor and memory coupled to the processor and having stored therein instructions that, if executed by the computer system causes the system to execute a method for accessing information from a column store database. In still another embodiment, instructions for performing the method are stored on a non-transitory computer-readable storage medium having computer-executable instructions for causing a computer system to perform a method for accessing information from a column store database. The operations of flow diagram 300A are implemented within the database system 100 and/or query manager/optimizer 120 of FIG. 1, in some embodiments of the present disclosure.

At 310, the method includes establishing a row store database for storing data, wherein each row of the row store database comprises a plurality of attributes. In one embodiment, the row store database is the source of truth. That is, the row store database is the source for data from which other databases may be built, such as, the column store database.

In addition, the state of data in the row store database is current to a temporal point in time. That is, with reference to the temporal point in time, the row store database does not include changes to the information (e.g., INSERT/DELETE/UPDATE operations) performed after that temporal point in time. In one case, the row store database current to a temporal point in time is generated from and is a subset of a database that contains up-to-date information for a given temporal point in time.

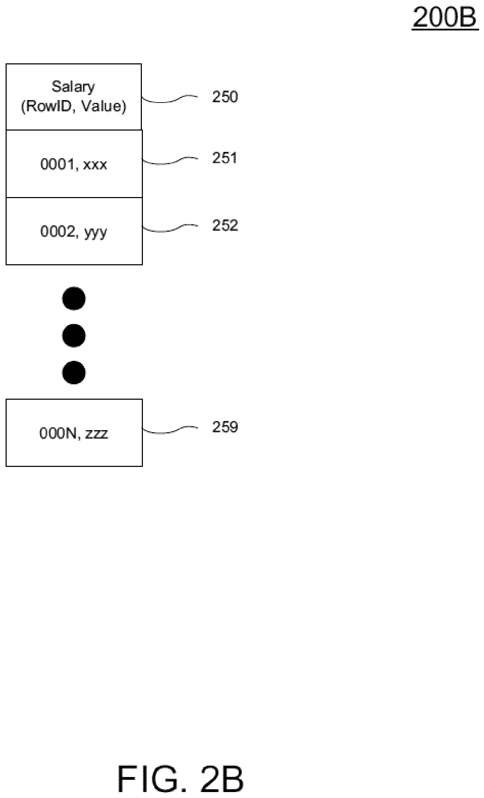

At 320, the method includes establishing a column store database comprising data structured to satisfy received analytic queries. The column store database contains a collection of attribute vectors for a table. More particularly, there exists one attribute vector for each column or attribute that is referenced by any of a plurality of queries accessing the database system. As previously described, the attribute vector includes a pair of information (e.g., *RowID, value;* or *primary key, value*) for each scanned record of a table (e.g., row store database). FIG. 2B is an illustration of an exemplary attribute vector 200B for the salary attribute of the employee table 200A, in accordance with one embodiment of the present disclosure. As shown in information block 250 for the attribute vector 200B containing salaries, each entry in the column includes a *RowID* that identifies the related row entry in the row store database, and a *value* representing the salary of the corresponding employee. For example, in field 251, the row entry is "0001" with a salary of "xxx"; in field 252 the row entry is "0002" with a salary of "yyy"; and for field 259, the row entry is "000N" with a salary of "zzz".

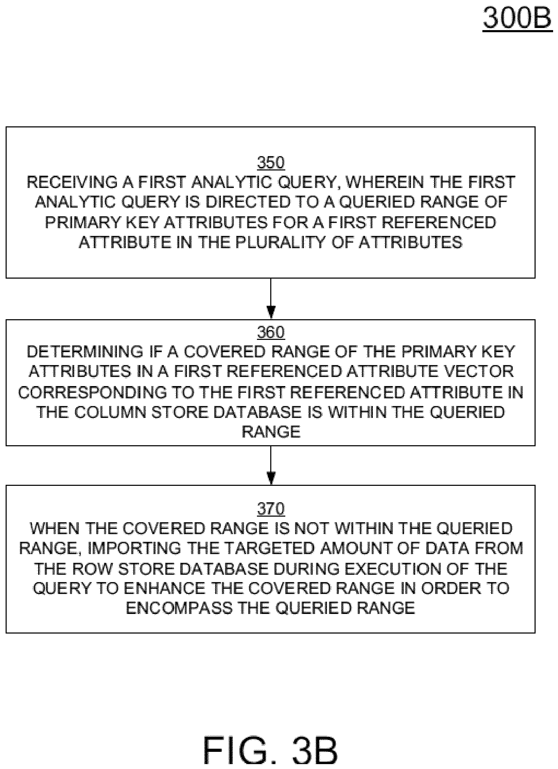

An attribute vector of the column store database is derived from a corresponding row store database dynamically and adaptively during scan operations of run time queries, in one embodiment. More specifically, at 330, the method includes beginning from an initial state of the column store database, for each subsequently received analytic query, importing a targeted amount of data from a corresponding temporal state of the row store database into the column store database to satisfy the subsequently received analytic query. Specifically, during the import of targeted information, a scan operation (either full table scan or partial table scan) on the row store database is performed to build/enhance the attribute vector for each referenced column in the column store when a query is executed on a row store. In general, the first set of analytic queries will be slower, as the attribute vectors over their required ranges are progressively built. However, later analytic queries will be executed quickly using existing attribute vectors in the column store and without importing targeted data. The process for importing targeted data is described more fully with respect to FIG. 3B below.

FIG. 3B is a flow diagram 300B illustrating a method for providing real-time analytical results from a query by dynamically and adaptively building a column store database by importing data that is targeted to satisfy an executing query, in accordance with one embodiment of the present disclosure. In one embodiment, flow diagram 300B illustrates a computer implemented method for dynamically and adaptively building a column store database by importing data that is targeted to satisfy an executing query. In another embodiment, flow diagram 300B is implemented within a computer system including a processor and memory coupled to the processor and having stored therein instructions that, if executed by the computer system causes the system to execute a method for dynamically and adaptively building a column store database by importing data that is targeted to satisfy an executing query. In still another embodiment, instructions for performing the method are stored on a non-transitory computer-readable storage medium having computer-executable instructions for causing a computer system to perform a method for dynamically and adaptively building a column store database by importing data that is targeted to satisfy an executing query. The operations of flow diagram 300B are implemented within the database system 100 and/or query manager/optimizer 120 of FIG. 1, in some embodiments of the present disclosure.

The process outlined in flow diagram 300B is implemented to build a column store adaptively to received analytic queries, dynamically and just-in-time to handle the received queries, and builds the column store database with just-enough data to service each received analytic query imported from a consistent database state (e.g., temporal state) of the row store database.

In particular, flow diagram 300B is implemented upon receipt and execution of an analytic query to adaptively and dynamically build/enhance attribute vectors of the column store database. At 350, the method includes receiving a first analytic query, wherein the first analytic query is directed to a queried range of primary key attributes for a first referenced attribute vector corresponding to a first referenced attribute in the plurality of attributes. The first analytic query is representative of any of a sequence of analytic queries received and configured for accessing data originally contained within a row store database. More particularly, the first analytic query is referencing one or more columns during its execution or run, to include data within a queried range of primary key attributes for each referenced attribute and its attribute vector. For instance, a query manager/optimizer (e.g., manager 120 of FIG. 1) is configured to determine which attribute vector(s), and over what ranges, are referenced by the first analytic query. For a specific query, the queried range of primary key attributes applies to each of the attribute vectors referenced by that query.

In one embodiment, an attribute vector is built when a column is referenced in a run time query and a table scan operation is first invoked to fetch table records. Different attribute vectors corresponding to different columns may be built at different times depending on when they are referenced in run time queries. An attribute vector can be enhanced later if an additional range is referenced in a subsequent query.

In one embodiment, for the columns that are not referenced in any received analytic queries except the primary key attribute, there is no need to create a corresponding attribute vector and load them into the column store database. In addition, for data records never scanned during scan operations (i.e. they are not in the range predicate) performed to satisfy a queried range, those data records are not included in the attribute vectors of the column store database. As such, the column store database is never over-built with any data not useful for any received analytic queries. Compared with the static-built column store (e.g., ETL), embodiments of the present invention disclosing the adaptively and dynamically built attribute vectors of a column store database are more efficient in terms of storage requirement since no resources are expended for storing data not referenced during any received analytic queries.

At 360, the method includes determining if a covered range of the primary key attributes in a first referenced attribute vector corresponding to a first referenced attribute in the column store database is within the queried range of primary key attributes. For example, a covered range of the salary attributes within the first attribute vector may contain information with Employee Number greater than 8000. The queried range defines the range of information requested by the query. For instance, the queried range may be directed to salary information with Employee Number (e.g., primary key range) greater than 9000, in which case, the queried range is encompassed by the covered range. In other cases, the queried range may not be encompassed by the covered range in the attribute vector. For example, the queried range may be directed to salary information with Employee Number greater than 5000. As such, portions of the queried range are not encompassed by the covered range, specifically, information with Employee Number between 5000 and8000, which is the targeted amount of data.

In one embodiment, metadata is generated and stored that tracks attribute vectors and their record or covered ranges that are built in the column store database. The method outlined in flow diagram 300B includes accessing the metadata comprising information related to each attribute vector in the column store database and a covered range (e.g., range of primary keys) corresponding to each attribute vector in the column store database in order to determine if the covered range of a referenced attribute vector encompasses the queried range of the first analytic query. For example, the query manager/optimizer is configured to access and consult the metadata to determine which attribute vectors, and over what ranges, are referenced for each analytic query. If the column store database contains the whole data set for a query, then the query manager/optimizer is configured to direct the query to access the column store database directly.

On the other hand, if the column store database does not contain the whole data set for a query, then the query manager/optimizer is configured to enhance the column store database with targeted data that is imported in order to satisfy the query. More specifically, at 370, when the covered range of primary key attributes is not within the queried range of primary key attributes for a referenced attribute vector of a referenced attribute, the method includes importing the targeted amount of data from the row store database during execution of query to enhance the covered range in order to encompass the queried range and to satisfy the first analytic query.

In particular, when executing the query, a scan operator is normally utilized to access data in the row store database. Embodiments of the present invention are able to piggy-back on top of the operations performed by the scan operator to build/enhance the attribute vector for each referenced column in the column store when a query is executed on a row store database. A scan operation performed by the scan operator can touch either all of records of a table by performing a full table scan, or a portion of records in a table by performing a partial table scan in embodiments of the present invention. As such, either a full table scan or a partial table scan may be performed (e.g., by a scan operator) to access the targeted amount of data imported to the column store database.

In a column store database, the table data are saved by columns, with one file per column. As such, only one disk I/O is performed when accessing a column of data. When a new record with ten columns is added to a table, the system needs to modify ten files in a column store. In one embodiment, batch processing of records is performed in order to speed up making the modification to the column store database.

In one embodiment, metadata relating to the attribute vectors in the column store database are updated to reflect changes, wherein the metadata includes information related to each attribute vector in the column store database and a covered range (e.g., range of primary keys) corresponding to each attribute vector in the column store database. In particular, the covered ranges of the attribute vectors are updated to reflect the targeted amount of data imported to satisfy the query.

Once the column store is modified with the targeted amount of data imported to satisfy the first analytic query, the method includes persistently storing the column store database to disk, in one embodiment. In that manner, when the database system fails, even though the column store database that exists in main memory (e.g., buffer or RAM) may also fail, a copy of the column store database is stored in non-volatile memory (e.g., disk), from which recovery can be performed.

In embodiments of the present invention, the first set of analytic queries received will be executed more slowly than later subsequent analytic queries. This is because the attribute vectors are newly created and the covered ranges are established. However, as the attribute vectors for the column store database are built progressively with each successive analytic query received and executed, the execution of later received analytic queries will be faster as the attribute vectors have already been built in the column store database, and may or may not need enhancement to satisfy the corresponding query.

### Full Table Scan

For illustration purposes only, the following sequence of analytic queries as executed is performed on the employee table, previously introduced and wherein a row entry 200A is described in FIG. 2A. In the example, a first analytic query in the sequence that is posed to analyze data contained within the employee table or row store database (e.g., the database containing row entry 200A of FIG. 2A) is presented as a SQL statement, as follows: "SELECT SUM (salary) FROM Employee;". This query is directed to the salary attribute of one or more attributes of the row store database. For efficiency, embodiments of the present invention access the salary information from a corresponding attribute vector or column containing salary information, such as that represented in FIG. 2B. In one embodiment, a full table scan is performed to access the targeted amount of data imported into corresponding attribute vector(s) in the column store database to satisfy query. For example, an attribute vector is built for the salary column.

Continuing with the example, a second analytic query in the sequence is presented, as follows: "SELECT Name FROM Employee WHERE StartDate > 'mm/dd/yyyy';". In the case where there is no secondary index on the StartDate column in the row store , the query manager/optimizer will direct the system to scan the entire table to fetch Name values. As such, an attribute vector will be built for the Name column and contains employee name attributes, and another attribute vector will be built for StartDate column and contains employee start dates. In the sequence presented, the Name and StartDate attribute vectors are built after the salary attribute is built during the previous query. This example shows that attribute vectors are built adaptively and just-in-time for run time queries.

For the columns, or ranges of columns, that are not referenced in the received analytic queries, there is no need to create and load them into the column store database in one embodiment. That is, with the adaptive and just-in-time approach of building attribute vectors for the column store database to satisfy run time queries, the column store database is not over-built with any columns that are not referenced or useful for any of the received analytics queries. For example, the 'Comment' column in the employee table, previously presented, will not appear in the column store if it is not referenced in any analytics queries.

In one embodiment, when the database system utilizes a secondary index to fetch records, it is not necessary to build the attribute vector using the secondary index access method. That is, the secondary index can be used when the system needs to fetch only a handful of records from the row store database. This is because the column store database does not show good performance benefits when only a handful of records are needed. For this query, the database system can fetch records from row store directly. Continuing with the example, a third analytic query in the sequence is presented, as follows: "SELECT * FROM Employee WHERE EmpNo = 2 0 01; " . This select query just retrieves one record (e.g., for employee number 2001) from the row store database using the primary index without a full table scan. In this case, the database system just fetches the record from row store directly. There is no need to build/enhance column store when executing this query.

### Partial Table Scan

A partial table scan can be used to access the row store database when building an attribute vector of a column store database to satisfy a query. A new sequence of queries is presented for illustration purposes only to illustrate the use of a partial table scan operation. For instance, the following sequence of analytic queries as executed is performed on the employee table, previously introduced and wherein a row entry 200A is described in FIG. 2A. In the example, a first analytic query in the sequence that is posed to analyze data contained within the employee table or row store database (e.g., the database containing row entry 200A of FIG. 2A) is presented as a SQL statement, as follows:

```
      SELECT EmpNo, Name, DeptNo, Title FROM Employee
             WHERE EmpNo > 8000;
```

In one embodiment, the database system utilizes a primary key/index to fetch records to build a corresponding attribute vector for a referenced attribute, especially when a large amount of records is accessed. For the above query, when importing a targeted amount of data for the columns containing information after the employee number of 8000, the primary key/index may be used to fetch those salary records, rather than performing a full table scan. If a query performs a sequential scan on a table partially, then the referenced attribute vector or vectors are built for those records that are scanned. That is, those attribute vectors are originally created. These attribute vectors can be enhanced when the rest of records are scanned in the future when executing subsequent queries.

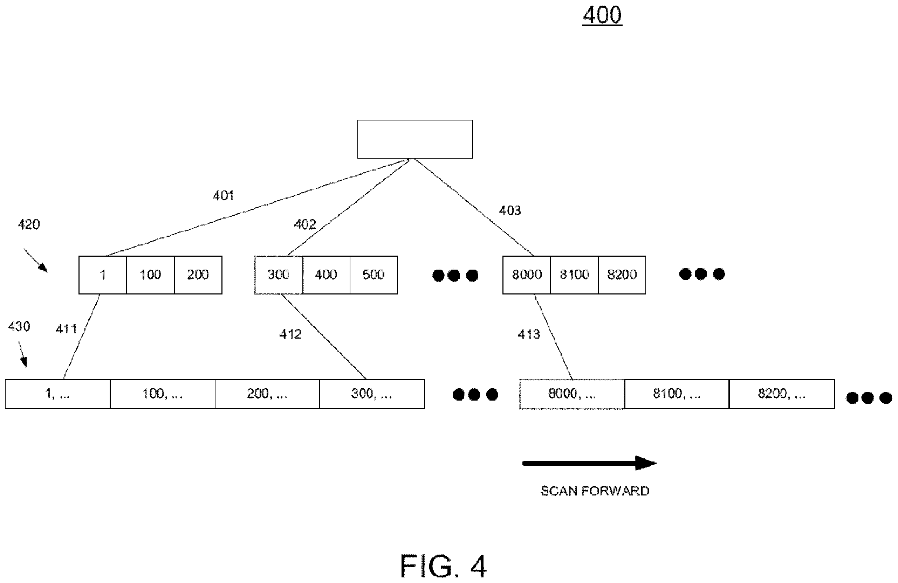

Suppose the previously introduced employee table has a B-tree like clustered index on a primary key column EmpNo in the row store database. For example, FIG. 4 is an illustration of a B-tree 400 of the employee table, wherein a primary index is used to perform a partial table scan when adaptively building a referenced attribute vector in a column store database, in accordance with one embodiment of the present disclosure. The first layer includes pointers to various fields in the second layer 420 containing employee identifiers. Pointers in the second layer provide access to various fields in the third layer containing the entire employee record.

As shown, the primary key is the employee identifier, which is defined in the fields of the second layer 420. Portions of the B-tree 400 can be referenced by using the proper primary key/index. For example, the record for employee number identifiers 1, 100 and 200 can be reached by following the pointer 401 for the primary index for employee 1, and then following the pointer 411 to reach the records. Also, the record for employee identifiers 300, 400, and 500 can be reached by following the pointer 402 for the primary index for employee 300, and then following the pointer 412 to reach the records. Further, the record for employee identifiers 8000, 8100, and 8200 can be reached by following the pointer 403 for the primary index for employee 8000, and then following the pointer 413 to reach the records.

The above query can be executed using a partial table scan to access referenced data. The partial table scan is performed by first locating the Employee record with the primary key of 8000, and then scanning forward. If this is the first time to partial scan Employee table, then attribute vectors are created for EmpNo, Name, DeptNo, and Title for those records great than 8000 in EmpNo column. Metadata is also saved on the available range and covered range of an attribute vector.

Continuing with the example, a second analytic query in the sequence is presented, as follows:

```
      SELECT EmpNo, Name, DeptNo, Title FROM Employee
             WHERE EmpNo > 9000;
```

Since the queried range with EmpNo greater than 9000 as referenced by the query is within the covered range of the attribute vector for EmpNo greater than 8000, there is no need to enhance the attribute vector. This is because the covered range encompasses the queried range.

Continuing with the example, a third analytic query in the sequence is presented, as follows:

```
      SELECT EmpNo, Name, DeptNo, Title FROM Employee
             WHERE EmpNo > 5000;
```

Since the queried range with EmpNo greater than 5000 as referenced by the query is not within the covered range of the attribute vector for EmpNo greater than 8000, there is now a need to enhance the attribute vector. This is because the queried range is a superset of the covered range. As such, the covered range of the attribute vector for EmpNo needs to be enhanced with records from EmpNo 5000 to EmpNo 8000.

For records not scanned in sequence of analytic queries, such as those records with EmpNo less than 5000 in the above case, there is no need to build or enhance attribute vectors with data corresponding to records for EmpNo less than 5000, in embodiments of the present invention. That is, in the adaptive and just-enough approach to building a covered range of an attribute vector, the column store database is not built using any data records that are not useful or reverend by any received analytic queries.

### Metadata

In embodiments of the present invention, the adaptive, just-in-time, and just-enough approach to building the column store database references metadata including information about the attribute vectors in the database. For instance, the metadata indicates what attribute vectors have been built in the column store database, and over what ranges of information (e.g., primary key ranges) are contained within those attribute vectors. As a result, the query manager/optimizer is configured to consult the metadata at analytic query run time to decide whether or not there is a need to build/enhance the referenced attribute vectors. For example, if the column store database contains the whole data set referenced by a query, then query manager/optimizer directs the query to access the column store directly.

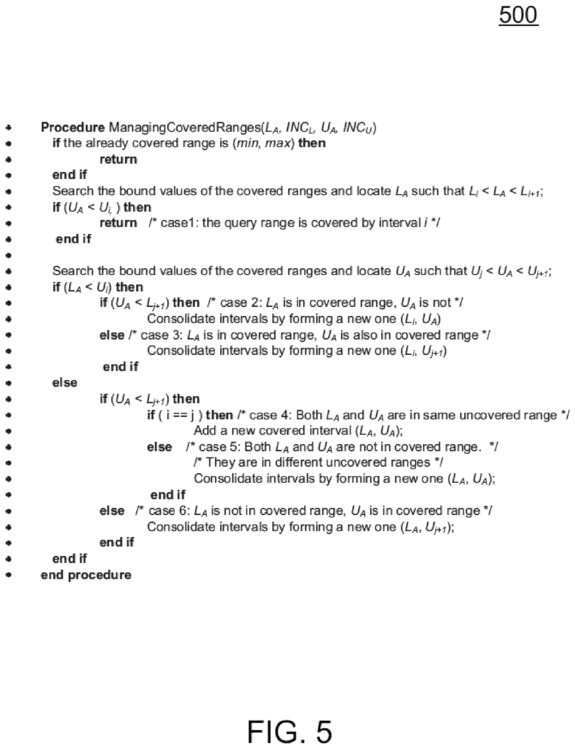

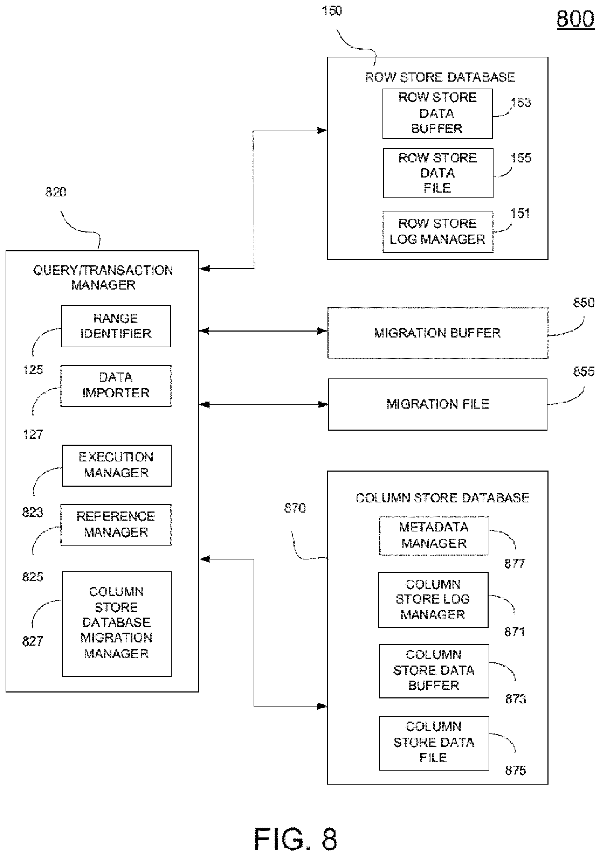

FIG. 5 is a diagram of an exemplary algorithm 500 implemented for managing metadata indicating what attribute vectors have been built in the column store database, and over what ranges of information (e.g., primary key ranges) are contained within those attribute vectors, in accordance with one embodiment of the present disclosure. The operations of algorithm 500 are implemented in part within the database system 100 and/or metadata managers 171 and 877 of FIGS. 1 and 8, respectively, in some embodiments of the present disclosure.

Suppose *min* represents the minimal possible value of a cluster index (*a.k.a.* primary key), and *max* represents the maximal possible value of the same cluster index. All the covered ranges (e.g., ranges of a primary key) for attribute vectors need to be reflected in the metadata. In particular, for each covered interval i, two range points are saved (*Lᵢ*, *Uᵢ*), where *Lᵢ* is the lower bound value and *Uᵢ* is the upper bound value.

The selection predicates in a SQL query can be decomposed into one or multiple disjoint ranges unionized by the OR operator. Each disjoint range having a continuous interval can have one of the following formats: 1) range condition (A < v) can be canonically represented as ( *min* < A < v); 2) range condition (A > v) can be canonically represented as ( v < A < *max*); and 3) range condition '(A > u) AND (A < v)' can be represented as (u < A < v).

If the entire table range is included, the range of the covered interval (e.g., the range over primary keys) is set as (*min, max*)*.* When the entire table is covered, then the process for determining and storing metadata should exit early since there are no more changes to the covered intervals.

Conditions of the algorithm 500 include merging a query range predicate *L_{A} < A < U_{A}* on clustered index A with the already covered ranges (e.g., primary key ranges). Another condition includes using *INC_{L}* to indicate whether *L_{A}* is inclusive or not. That is, when *INC_{L}* is true, the one-sided range condition is *L_{A}* <= A; otherwise, it is *L_{A}* < A. Still another condition includes using *INC_{U}* to indicate whether *U_{A}* is inclusive or not. Another condition includes using *min* to represent the minimal possible primary key value of a table, and using *max* to represent the maximal possible value primary key value of a table. Still another condition includes for a covered interval in the metadata, defining *Lᵢ* as the lower bound for interval i and *Uᵢ* as the upper bound of the covered interval i.

As shown in algorithm 500, the lower bounds and upper bounds of all the disjoint covered intervals (e.g., primary key ranges) are in sequence order with the following property: *L₁* < *U₁* < *L₂* < *U₂* < *L₃* < *U₃* < ........ For most cases, it is not expected to take many intervals of executing queries to sufficiently build up the attribute vectors of the column store database before subsequent queries are executed quickly. It is expected that the covered intervals of a column may consolidate to one interval (*min*, *max*) before long. Once it covers the entire column with (*min*, *max*), there are no more changes to the metadata for a given column or attribute vector. Therefore, a simple one-dimensional array (or vector) is sufficient to contain all the bound values of the covered intervals, in one embodiment. In case there are many covered intervals, a binary tree may be used, such as AVL-tree, to contain all the lower/upper bound values so that *L_{A}* and *U_{A}* may be quickly located for a query range predicate.

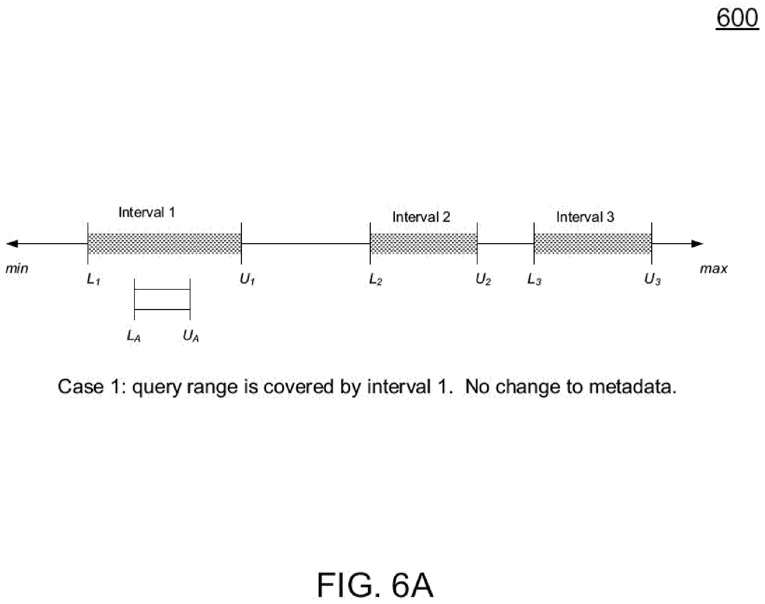

FIGS. 6A-F are illustrations of various examples of comparing covered intervals (e.g., primary key ranges) of an attribute vector to a query range, in accordance with embodiments of the present disclosure.

As shown in FIG. 6A, for Case 1 an attribute vector 600 includes information over a range (e.g., of primary keys) between *min* and *max.* The covered range includes interval 1, having a lower bound of *L₁* and an upper bound of *U₁*. The covered range also includes interval 2, having a lower bound of *L₂* and an upper bound of *U₂*. The covered range also includes interval 3, having a lower bound of *L₃* and an upper bound of *U₃.* In Case 1, the queried range has a lower bound of *L_{A}* and an upper bound of *U_{A}*. Because the queried range is entirely contained in interval 1, there is no change to metadata, and the attribute vector 600 is sufficient to satisfy the query without importing addition data.

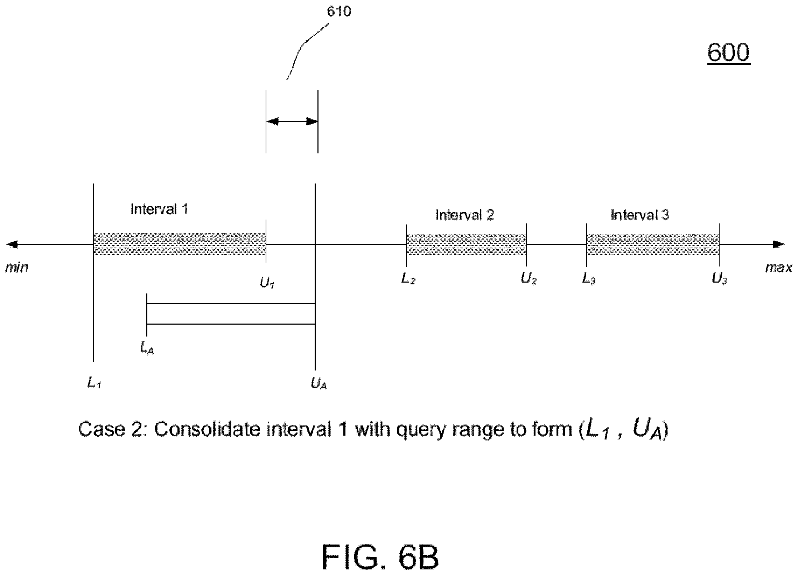

As shown in FIG. 6B, for Case 2, the queried range (*L_{A}*, *U_{A}*) now overlaps with interval 1, such that the covered range does not sufficiently encompass the queried range. For example, the lower bound *L_{A}* of the queried range resides within interval 1, while the upper bound *U_{A}* resides outside any of intervals 1-3 in an uncovered space. When the query runs, the attribute vector 600 is enhanced with records in the range (*U₁*, *U_{A}*) in the enhancement zone 610. In the metadata, the bounds of interval 1 are revised to (*L₁*, *U_{A}*) of the newly formed continuous interval. That is, the upper bound of interval 1 is modified to *U_{A}*.

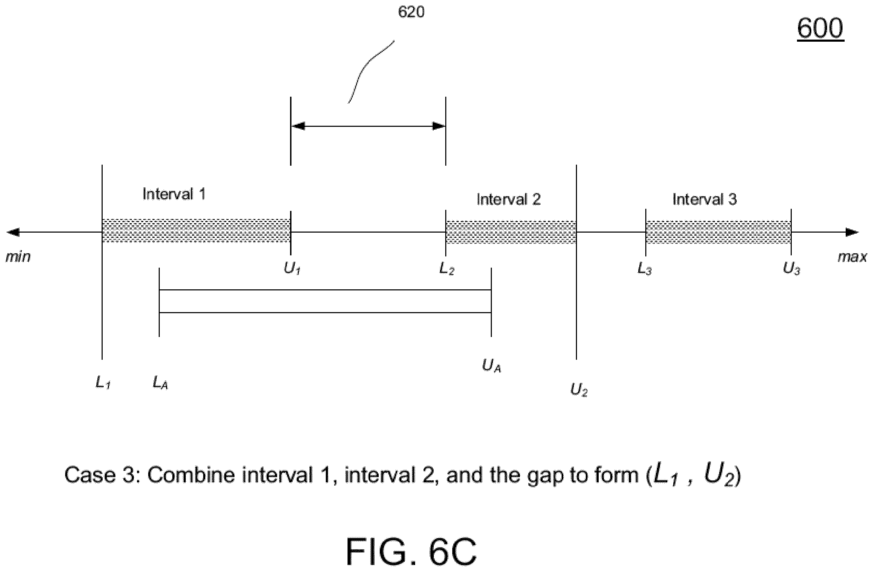

As shown in FIG. 6C, for case 3 the queried range (*L_{A}*, *U_{A}*) overlaps with two intervals: interval 1 and interval 2. The lower bound *L_{A}* of the queried range resides in interval 1, while the upper bound *U_{A}* resides in interval 2. When the query runs, the attribute vector 600 is enhanced with records in the range (*U₁*, *L₂*) in the enhancement zone 620. In metadata, both interval 1 and interval 2 is replaced with a new continuous interval having the range (*L₁*, *U₂*). For instance, the upper bound of interval 1 may be modified to *U₂*, while interval 2 is erased. Also, equally effective, the lower bound of interval 2 may be modified to *L₁*, while interval 1 is erased.

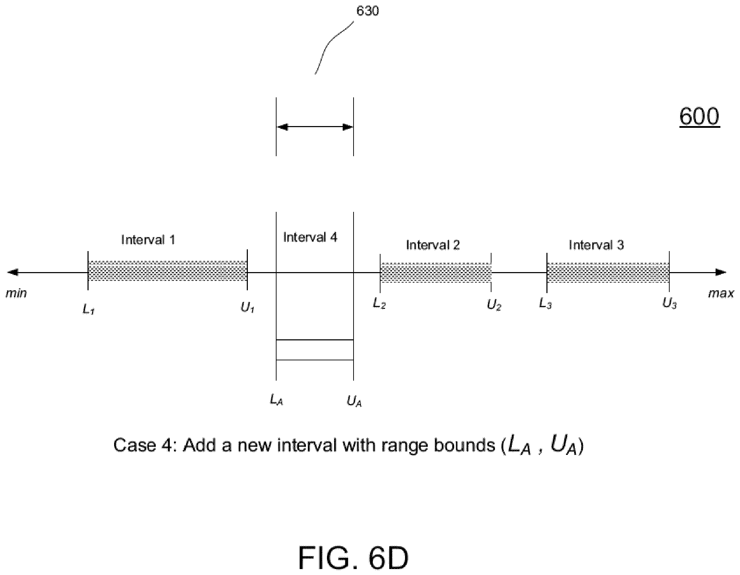

As shown in FIG. 6D, for case 4 the queried range resides entirely in a single uncovered interval, as shown in the enhancement zone 630. When the query runs, the attribute vector 600 is enhanced with records in the range (*L_{A}*, *U_{A}*), shown in enhancement zone 630. The metadata includes a new interval 4 with range (*L_{A}*, *U_{A}*).

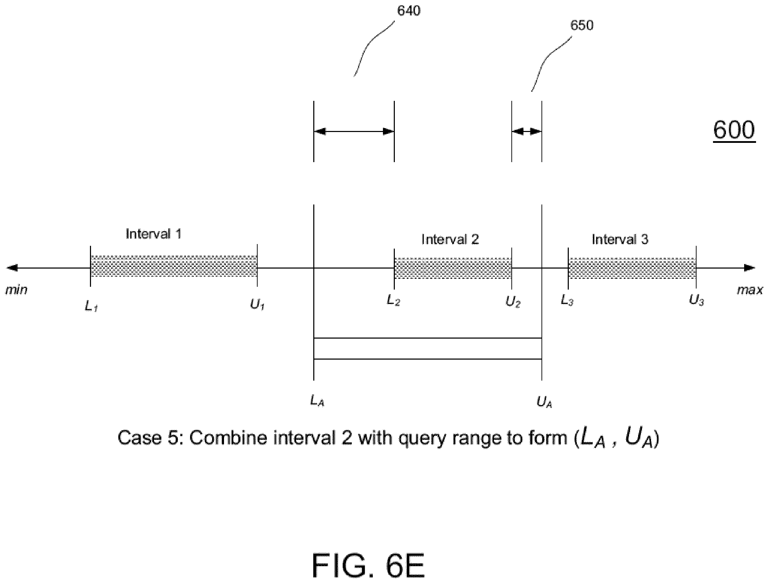

As shown in FIG. 6E, for case 5, the queried range (*L_{A}*, *U_{A}*) entirely covers interval 2. However, both the lower bound *L_{A}* and the upper bound *U_{A}* reside in different uncovered intervals. For example, the lower bound *L_{A}* resides between interval 1 and interval 2, and the upper bound *U_{A}* resides between interval 2 and interval 3. When the query runs, the attribute vector 600 is enhanced with records in the range (*L_{A}*, *L₂*) of enhancement zone 640, and records in the range (*U₂*, *U_{A}*) of enhancement zone 650. In metadata, we replace interval 2 with a new interval having the range (*L_{A}*, *U_{A}*).

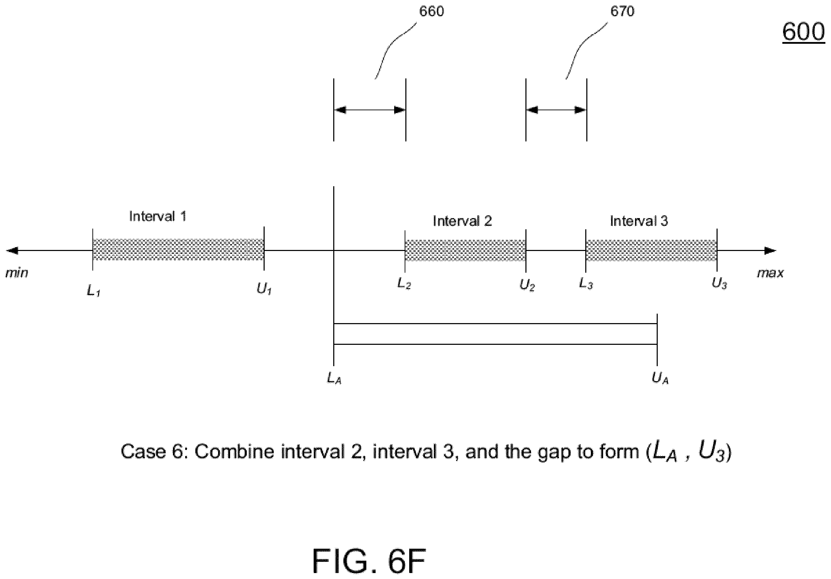

As shown in FIG. 6F, for case 6, the lower bound *L_{A}* resides in an uncovered interval, between interval 1 and interval 2, and the upper bound *U_{A}* resides in covered interval 3. When the query runs, the attribute vector 600 is enhanced with records in the range (*L_{A}*, *L₂*) of enhancement zone 660, and records in the range (*U₂*, *L₃*) of enhancement zone 670. In metadata, interval 2 and interval 3 are consolidated and replaced with a continuous interval having the range (*L_{A}*, *U₃*). For instance, the lower and upper bound of interval 2 may be modified to (*L_{A}*, *U₃*), while interval 3 is erased. Also, equally effective, the upper and lower bounds of interval 3 may be modified to (*L_{A}*, *U₃*) while interval 2 is erased.

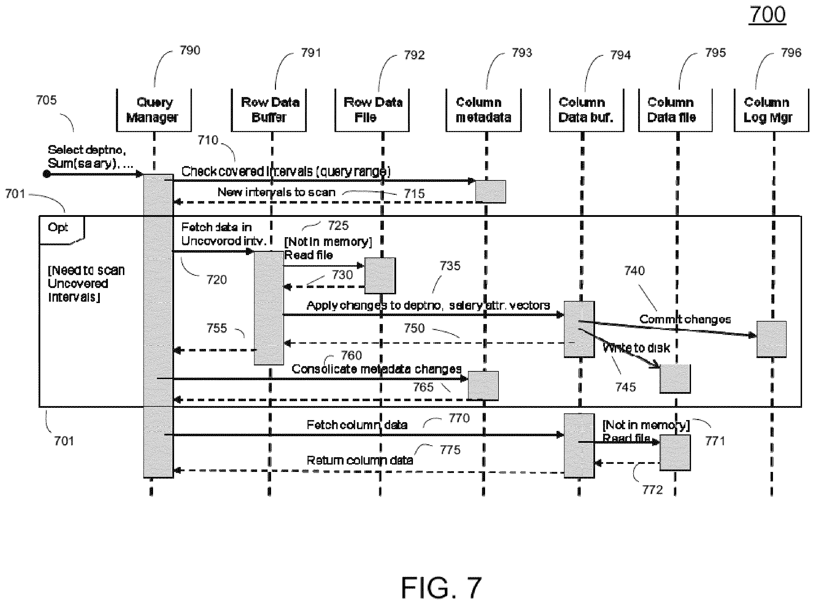

FIG. 7 is an illustration of a Unified Modeling Language (UML) sequence diagram 700 for dynamically and adaptively building a column store database by importing data that is targeted to satisfy an executing query, in accordance with one embodiment of the present disclosure. For purposes of illustration only, the UML sequence diagram 700 is described through the execution of a sample query, as follows: "SELECT DeptNo, SUM(salary) FROM Employee GROUP BY DeptNo;". The SELECT statement is asking to sum the salaries of employees for each department. As shown in FIG. 7, the various interactions are arranged in time sequence among the components when executing the SELECT statement.

At operation 705, the query manager 790 receives the query or SELECT statement. The query manager 790 manages the process of building the column store database and accessing data from the column store database to process the query and obtain a result. At operation 710, the covered range/intervals (e.g., primary key ranges) of the attribute vectors in the column store database are fetched from the column metadata 793 (e.g., from the column log file) and returned to the query manager 790. At operation 715, the query manager 790 compares the covered intervals against the queried range(s)/interval(s) to determine if the attribute vectors need to be created or the covered ranges need to be enhanced. If an attribute vector needs to be enhanced, then the process defined in outline 701 is performed and managed by the query manager 790. Otherwise, the covered ranges in the attribute vector is sufficient to satisfy the query, and the column data is fetched at operation 770 from the column data buffer 794, or fetched from the column data file 795 (e.g., disk) at 771, and returned to the buffer column data buffer 794. The column data is returned to the query manager 790 at operation 775 to process the query.

The query manager/optimizer 790 is configured to use a table scan operator to fetch all employee records referenced by the query to compute the result. When an attribute vector needs to be created or enhanced, the operations in outline 701 are performed. At operation 720, the data in the uncovered interval (e.g., over a range of primary keys) is fetched from the row data buffer 791. If the buffer 791 does not contain the data, then at operation 725 the data in the uncovered interval is fetched from the row data file 792, and returned at operation 730 to the row data buffer 791. At 735, the retrieved data in the uncovered interval (e.g., the targeted amount of data) is transferred to the column data buffer 794. The applied changes are committed at operation 740 and reported to the column log manager 796. In addition, the attribute vectors and their corresponding metadata are saved to disk at operation 745. After the changes are committed a function call is returned to the row data buffer at operation 750, and another function call is returned to the query manager 790 at operation 755. At operation n760, the query manager consolidates and updates the column metadata 793 to reflect the changes, and a function call 765 is returned to query manager 790. In that manner, the query manager 790 understands that the query can be processed using the column store database. The process moves on to fetch the column data at operation 770 from the column data buffer 794, or it is fetched from the column data file 795 (e.g., disk) at 771 when the data is not in memory, and returned to the buffer column data buffer 794. The column data is returned to the query manager 790 at operation 775 to process the query.

In one embodiment, updating an attribute vector and updating its metadata should be done in one transaction in order to maintain the contents of metadata consistent with the corresponding attribute vectors. It should be noted that both column store and its metadata are built internally to help speed up the analytics queries, in one embodiment. That is, they are transparent to end users. As such, the end users only are exposed to the table schema defined in the row store database.

### ADAPTIVELY BUILDING AND UPDATING A COLUMN STORE DATABASE FROM A ROW STORE DATABASE BASED ON QUERY DEMANDS

Embodiments of the present invention described in FIGS. 1-7 disclose building attribute vectors of a column store database dynamically and adaptively in response to received analytic queries from a row store database, wherein the row store database is in a consistent or temporal state. Other embodiments of the present invention described in FIGS. 8-15 disclose the building and updating of attribute vectors of a column store database dynamically and adaptively in response to received analytic queries from a row store database, while maintaining the row store database in a consistent or up-to-date state.

FIG. 8 is block diagram of a database system 800 including a row store database 150 and a column store database 870, wherein the column store database 870 is built and updated in response to executing analytic queries, in accordance with one embodiment of the present disclosure. Database system 800 includes components previously described in relation to database system 100 of FIG. 1, wherein similarly numbered components have similar functionalities. In particular, the column store database 870 is built dynamically and adaptively to executed analytic queries. A normally utilized scan operation (either full table scan or partial table scan) on the row store database is implemented to build/enhance the attribute vector for each referenced column in the column store when a query is executed on the row store database. Further, when a referenced attribute vector and its covered intervals are used by a query, recently committed changes need to be included within the column in order to show real time data content. Specifically, when changes are committed to the row store database, the contents of the column store database are not updated immediately to reflect the changes, such that the column store data is not synchronized with row store data in real time. Instead, embodiments of the present invention dynamically and adaptively update the column store database by refreshing column store data based on run-time analytic queries.

As shown in FIG. 8, the database system 800 includes a row store database 150, wherein each row includes a plurality of attributes. The row store database 150 is the source of truth, such that data in the row store database 150 stores the true values. In one embodiment, the row store database maintains data consistency all the time, such that that the row store database is up-to-date.

As illustrated in a previously introduced example, row store database 150 may be defined as an employee table that includes eight attributes, wherein a table is a collection of records. For illustration, the employee table may include information related to the employees of a company, wherein the information is defined as attributes, to include EmpNo, Name, Gender, DeptNo, StartDate, Title, Salary, and Comments.

As previously described, the row store database includes a row store data buffer 153 for storing data in a non-persistent manger, and a row store data file 155, for storing data in a persistent manner, such as storing to disk. A row store log manager 151 manages updates and changes to the row store database 150 by controlling the flow of data through the row store data buffer 153 and the row store data file 155. In addition, instructed by query/transaction manager 820, the row store log manager 151 is configurable to manage the determination and migration of change transactions to a migration buffer 850 for later use in updating the column store database in response to receipt of an analytic query, wherein the migrated change transactions are directed to existing columns in the column store database.

In addition, the database system 800 includes a column store database 870 that includes data structured to satisfy received analytic queries. The column store database includes a column store data buffer 873 configured to store data in a non-persistent state (e.g., main memory), and a column store data file 875 configured for storing data in a persistent state (e.g., to disk). A column store log manager 871 manages updates and changes to the column store database 870 by controlling the flow of data through the column store data buffer 873 and the column store data file 875. Again a column store metadata manager 877 manages metadata information such as what attribute vectors have been built, the covered ranges of various attribute vectors, and synchronization points, etc.

The column store database comprises a plurality of attribute vectors, wherein each attribute vector includes entries for a corresponding attribute in the row store database. For example, each entry of the attribute vector corresponds to a scanned record of a row table, and includes a pair of information (e.g., *RowID, value),* wherein *RowId* corresponds to a related row entry, and the *value* is an abbreviated/encoded internal representation of the data. As previously described, a primary key is used to reference row entries in the row store database, and is mappable to a corresponding *RowID.* Moreover, each of the plurality of attribute vectors includes data that is stored and used to satisfy at least one of a plurality of previously received analytic queries.

A query/transaction manager 820 is configured for receiving a plurality of change transactions (e.g., *Insert*/*Delete*/*Update*) directed to the row store database. Each of the change transactions is ordered, such as associating a change transaction with a corresponding log sequence number (LSN). The ordering or log sequence information for the row store database 150 is used to migrate change data to the column store database 870, in one embodiment. As such, a change transaction is associated with an LSN that acts to provide a time stamp or a sequential ordering mechanism for operations/transactions and/or queries performed on the database system 800. Importantly, the query/transaction manager 820 is configured for updating a first attribute vector corresponding to a first referenced attribute referenced by a first analytic query based on log information corresponding to change transactions directed to attributes in the first attribute vector to satisfy the first analytic query.

In particular, the query/transaction manager 820 is configured to manage the execution of change transactions and the storing of data within the row store database 150 during the execution of the change transaction. In particular, the query/transaction manager 820 includes an execution manager 823 that is configured for executing the plurality of change transactions on the row store database.

In addition, the query/transaction manager 820 is also configured to manage the migration of data to the column store database with the execution of subsequently received analytic queries. As such, data within the column store database 870 is targeted to satisfy previously received queries. Specifically, the column store database 870 is updated using log change data at the last minute during analytic query processing, such that the column store database achieves data consistency (to match the state of the row store database for all columns in the column store database referenced in a given query) at the last minute when handling the analytic query. This is performed in a two-stage migration process to migrate changes.

In stage 1 of the migration process, a column store reference manager 825 in the query/transaction manager 820 is configured for determining a subset of change transactions from the plurality of change transactions received and directed to attributes stored within the plurality of attribute vectors of the column store database. That is, in stage 1, the proper subset of row store log information is identified for migration. The subset of log information is extracted and imported into a migration buffer 850, wherein the log information corresponds to the subset of change transactions. In one embodiment, data within the migration buffer 850 is written to a migration file 855 for persistent storage in case the migration buffer runs out of space.

The subset of change transactions determined from the plurality of change transactions performed on the row store database meets three conditions when performing migration. The first condition is that change transactions within the subset are directed to existing columns or attribute vectors in the column store database. The second condition is that each change transaction within the subset is directed to a covered interval (e.g., using primary keys) of a corresponding and existing column or attribute vector in the column store database. The third condition is that each change transaction is a committed transaction.

Performing stage 1 should have minimal impact on OLTP performance, as it copies only a subset of the log change data for row store to the migration buffer associated with the column store database. As such, there is no additional disk I/O introduced for the row store database commit process. The stage 1 operation happens during *INSERT* / *DELETE* / *UPDATE* transactions.

The query/transaction manager 820 is configured for receiving a first analytic query that is directed to a first referenced attribute in the plurality of attributes. For instance, an exemplary query may ask for the number of males in a corporation, and as such is directed to the gender attribute. That is, by accessing the values in the referenced attribute vector corresponding to the gender attribute, the query can be executed to present a result. It is understood that the first referenced attribute corresponds to a first attribute vector (containing first attribute values migrated from row store entries) in the column store database 870.

The query/transaction manager 820 also includes a column store database migration manager 827 that is configured for updating the first attribute vector based on the log data corresponding to change transactions that are directed to the first referenced attribute. A two stage updating process is performed on the column store database to satisfy the first analytic query, such that the data in the column store database is consistent with the data in the row store database 150 during execution of the query. In the first stage, the migration manager 827 by itself, or by instructing the row store log manager 151 for handling, migrates row store log data for selected change transactions to a migration buffer for purposes of updating the column store database 870 at a later time. The second stage is performed by the migration manager 827 when an analytic query executes at run time to apply the deltas/changes saved in the migration buffer to the referenced attribute vectors of the column store database 870.

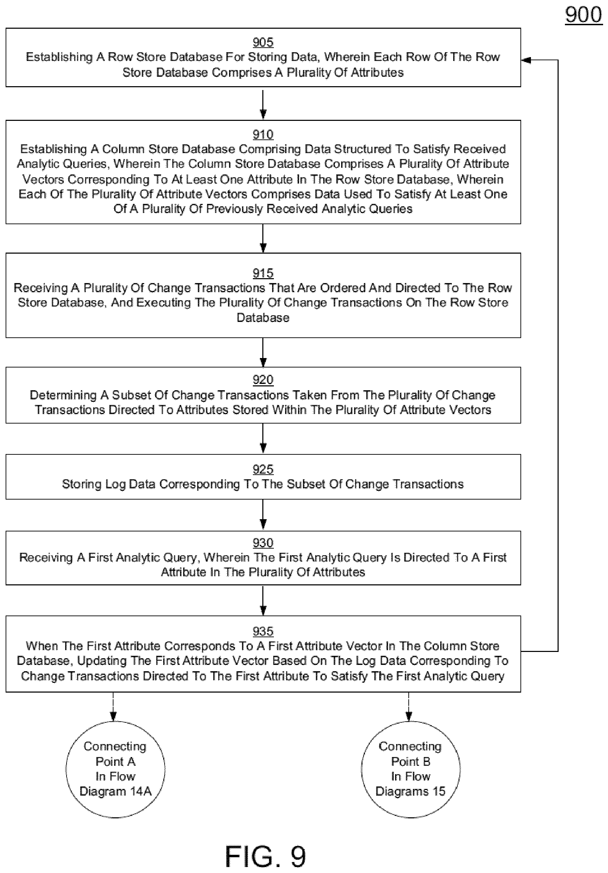

FIG. 9 is a flow diagram 900 illustrating a method for providing real-time analytical results by dynamically and adaptively updating a column store database by importing a targeted amount of data to referenced attribute vectors in order to satisfy an analytic query, in accordance with one embodiment of the present disclosure. In one embodiment, flow diagram 900 illustrates a computer implemented method for providing real-time analytical results by dynamically and adaptively updating a column store database by importing a targeted amount of data to referenced attribute vectors in order to satisfy an analytic query. In another embodiment, flow diagram 900 is implemented within a computer system including a processor and memory coupled to the processor and having stored therein instructions that, if executed by the computer system causes the system to execute a method for providing real-time analytical results by dynamically and adaptively updating a column store database by importing a targeted amount of data to referenced attribute vectors in order to satisfy an analytic query. In still another embodiment, instructions for performing the method are stored on a non-transitory computer-readable storage medium having computer-executable instructions for providing real-time analytical results by dynamically and adaptively updating a column store database by importing a targeted amount of data to referenced attribute vectors in order to satisfy an analytic query. The operations of flow diagram 900 are implemented within the database system 100 and/or database system 800 of FIGS. 1 and 8, respectively, in some embodiments of the present disclosure.

The operations disclosed in flow diagram 900 are implemented to dynamically build and update a column store database from a row store database using a just-in-time and just-enough approach. When processing a query that is directed to a referenced attribute, the corresponding attribute vector in the column store database is updated to include recently committed change data saved in a migration buffer in order to show real time data content. That is, when changes are committed to the row store database, the corresponding column store database is not immediately updated to reflect those changes, such that that column store data is not synchronized with the row store data in real time. Instead, the change data is saved in migration buffer first and then the column store database is updated based on the subsequent run-time query demands.

The operations disclosed in flow diagram 900 in general include establishing a row store database for storing data, wherein each row of the row store database comprises a plurality of attributes; establishing a column store database comprising data structured to satisfy received analytic queries, wherein the column store database comprises a plurality of attribute vectors corresponding to at least one attribute in the row store database, wherein each of the plurality of attribute vectors comprises data used to satisfy at least one of a plurality of previously received analytic queries; receiving a plurality of change transactions directed to the row store database, wherein each of the plurality of change transactions are ordered; and when a first referenced attribute referenced by a first analytic query corresponds to a first attribute vector in the column store database, updating a first attribute vector based on the log information corresponding to change transactions directed to the first referenced attribute to satisfy the first analytic query. Flow diagram 900 is described in more detail below.

At 905, the method includes establishing a row store database for storing data, wherein each row of the row store database comprises a plurality of attributes. The row store database is the source of data from which other databases may be built, such as, a column store database. In one embodiment, the row store database maintains data consistency all the time, such that that the row store database is up-to-date. In addition, for the row store database, the attributes are associated with fields in a row entry/record. For example, attributes may be employee information (e.g., EmpNo, Salary, etc.) for the previously introduced employee table, wherein the table is a collection of records.

At 910, the method includes establishing a column store database comprising data structured to satisfy received analytic queries. That is, the column store database includes data that are selected and stored for purposes of satisfying previously received queries. Specifically, the column store database comprises a plurality of attribute vectors, each of which corresponds to an attribute in the row store database. As such, each attribute vector corresponds to a column in the column store database and includes values for a corresponding attribute from one or more row entries in the row store database. Furthermore, each of the plurality of attribute vectors includes data used to satisfy at least one of a plurality of previously received analytic queries.

At 915, the method includes receiving a plurality of change transactions directed to the row store database, wherein each of the plurality of change transactions is ordered. In one embodiment, each change transaction is associated with a corresponding log sequence number (LSN) for purposes of ordering operations and transactions within the database.

In one embodiment, the change transactions are stored from an initial state of the database system. Since the change transactions are ordered, relevant change transactions can be determined for a query based on the referenced columns, and used for updating the column store database at run time of the query. For example, the change transactions beginning from a last synchronization point of a referenced attribute vector are used for updating. In another embodiment, only change transactions beginning from the last synchronization point are identified in the migration buffer, and as such the stored change transactions are used for updating.

In addition, the plurality of change transactions is executed on the row store database. In one embodiment, the change transactions are executed in real time, such that the row store database is up-to-date and reflects the most current information. In that manner, the row store database is the source of truth when referring to information.

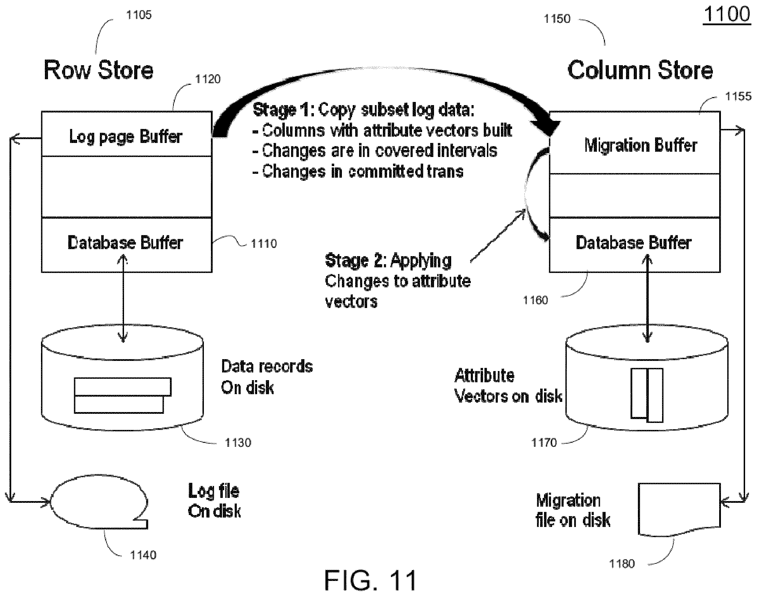

At 920, the method includes determining a subset of change transactions taken from the plurality of change transactions, wherein change transactions in the subset are directed to values or attributes stored within the plurality of attribute vectors. Specifically, at 920, the first stage (also referred to as "stage 1") of migrating changes from the row store to the column store is disclosed, wherein the transaction logs in row store are utilized to migrate changes to a migration buffer to be read into a column store at a later time, when running a query. The first stage may be performed by the query/transaction manager 820 of FIG. 8, in one embodiment. In another embodiment, the row store log manager 151 at the request of the query/transaction manager 820 performs the first stage of migration. The first stage is described in more detail in relation to FIGS. 11-12 below.

Change transactions that satisfy each of the following conditions can be stored and used for updating the column store database. First, a change transaction is selected as part of the subset when it is directed to an existing attribute vector, and more particularly when it is operating on an entry in an existing attribute vector in the column store database. Second, to be part of the subset, the change transaction must be directed to data that is within a covered range of the existing attribute vector. For example, the change transaction is operating on an entry that is within a covered range of primary keys of the attribute vector. Third, to be part of the subset, the change transaction must be a committed transaction, such that the transaction has recorded all of its changes in the row store database, and/or to a log file.

At 925, the method includes storing log data or metadata corresponding to the subset of change transactions. While an attribute vector can be built from the row store database, this process is burdensome and inefficient, especially when there are just a small number of changes to a large table containing many records. Embodiments of the present invention take advantage of the transaction logs in the row store database, which records all of the changes to the row store database. In many database systems, the "Write Ahead Log" protocol is often used by a transaction log manager. In this protocol, a change transaction cannot commit until it has recorded all of its changes to a corresponding log file on disk. In addition, log records may be added to a log page buffer, which is persisted to disk when a transaction is committed. Changes to table data can be written to the disk after a transaction commit.

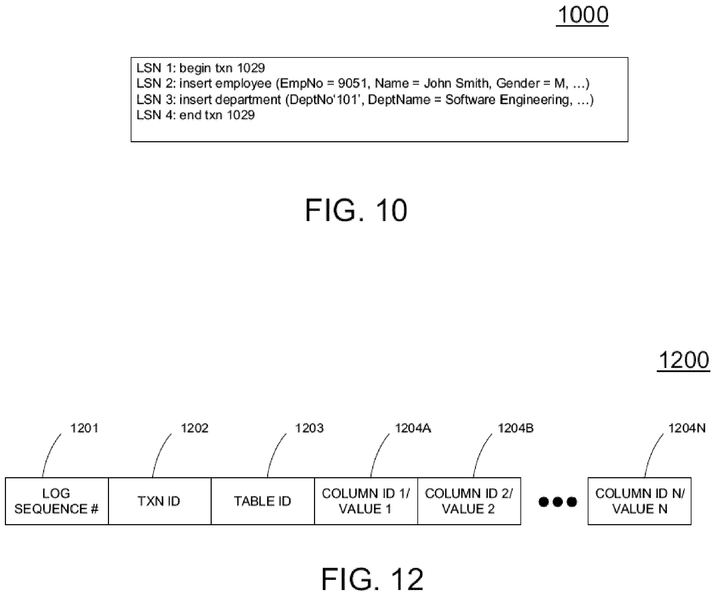

For instance, for purposes of illustration, the log file 1000 of the row store database may include entries provided in FIG. 10, which is an illustration of an explicit change transaction 1029 that references at least one attribute vector in a column store database, in accordance with one embodiment of the present disclosure. The listed entries in the log file 1000 may apply to a single change transaction identified as "txn 1029" but include multiple data statements, such as additional *insert* statements. The txn 1029 is assigned multiple LSNs 1-4. LSN 1 indicates the start of txn 1029, and LSN 4 indicates the end of txn 1029. Specifically, the change transaction 1029 includes two *INSERT* statements, wherein the first *INSERT* statement LSN 2 inserts information for an existing and/or a new employee record into an employee table. For example, the *INSERT* statement LSN 2 inserts values for eight columns, including values for EmpNo. (9051), Name (John Smith), Gender (M), etc. The second *INSERT* statement LSN 3 inserts information for an existing and/or new department record into a department table. For example, the *INSERT* statement LSN 3 inserts values for at least 2 columns, including values for department number 101, and department name for software engineering, etc.

For purposes of illustration, the log data may include a LSN for the change transaction, the change transaction, a before image of the entry, an after image of the entry, etc. However, reading the log file of the row store to find the incremental changes and propagate to the column store is undesirable, since disruption of the sequential write operation on the log file for read access may reposition the disk read/write head, which can lead to longer disk access times, for both reads and writes. Instead, embodiments of the present invention do not disrupt the sequential write operation to the row store's log file at run time of the query, and instead migrate those log data corresponding to the change transactions to a migration buffer for later access when executing a subsequently received query.

At 930, the method includes receiving a first analytic query that is directed to a first referenced attribute in the plurality of attributes. The query may reference more than one attribute, and in that case, the process for individually updating each attribute vector associated with one of the referenced attributes is updated using flow diagram 900.

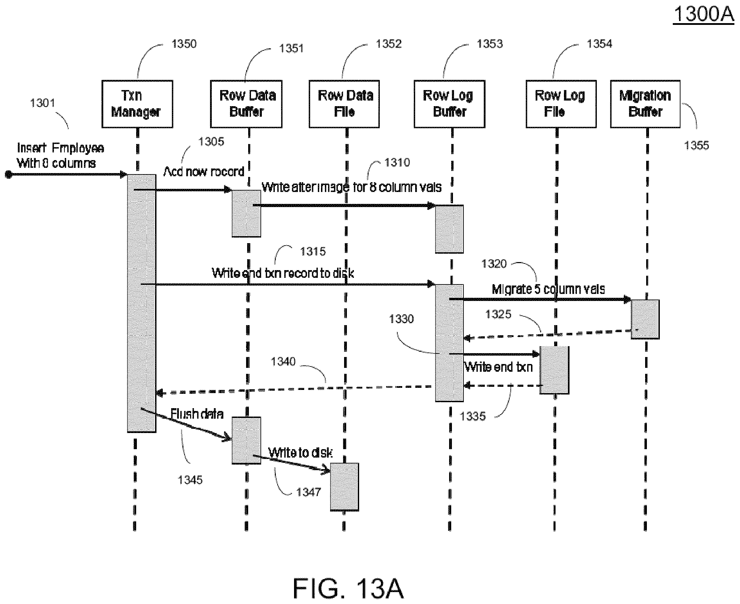

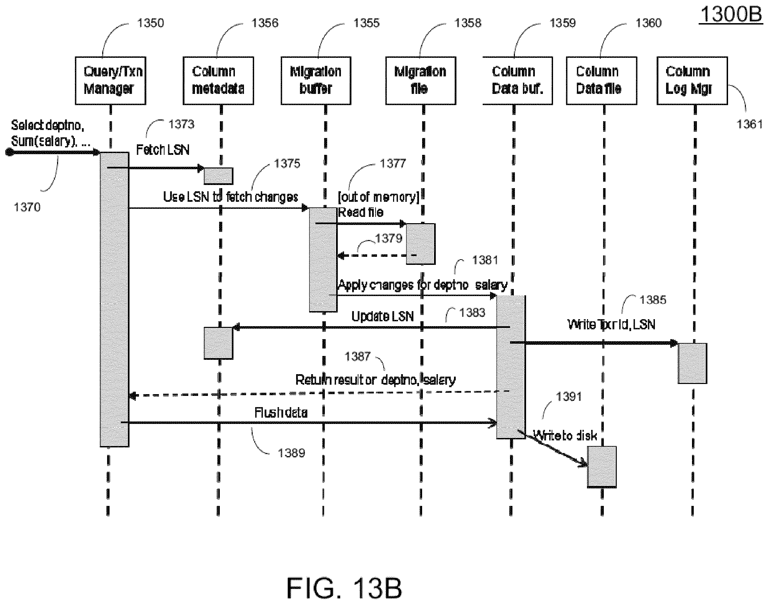

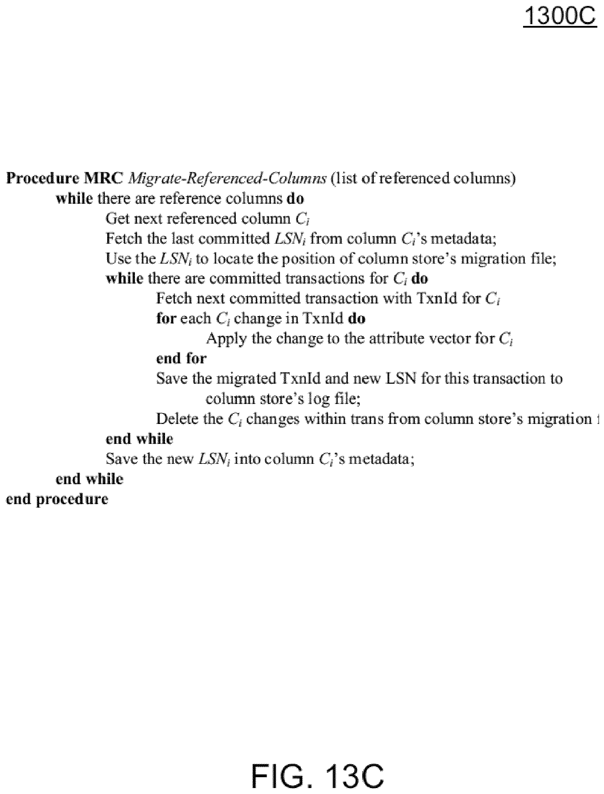

At 935, the method includes updating the first attribute vector associated with the first referenced attribute based on log data corresponding to change transactions that are directed to the entries in the first attribute vector to satisfy the first analytic query. This describes the second stage of migration that is implemented to move changes to the attribute vectors in the column store database. That is, when an existing attribute vector is associated with the first referenced attribute, the attribute vector is updated using the log data of appropriate change transactions. The column store is built and updated dynamically and adaptively when analytical queries are running. The second stage is described in more detail in relation to FIGS. 11 and 13 below.

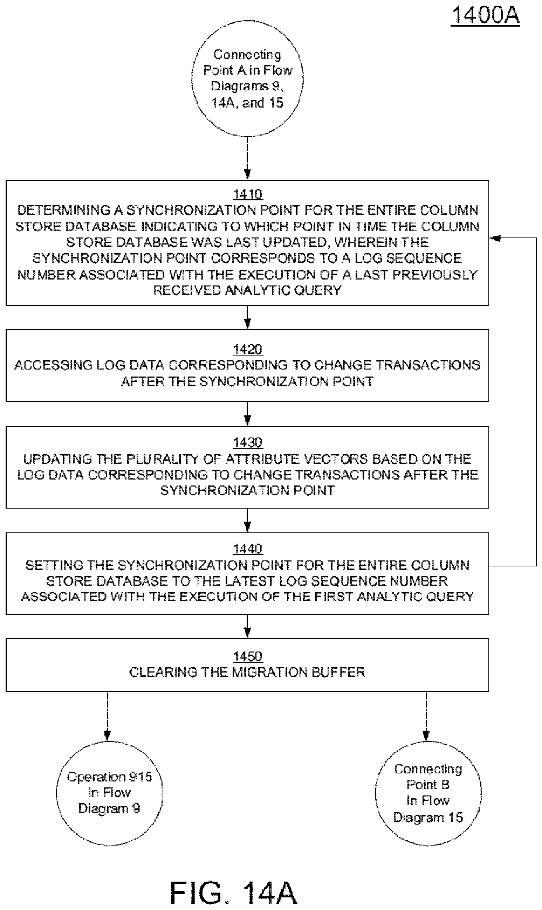

The method outlined in flow diagram 900 optionally proceeds back to 905 and/or to connecting points A or B used in flow diagrams 1400A and 1500 of FIGS. 14A and 15, respectively, in embodiments. In that manner, the MRC and MAC migration techniques may be combined in any manner for purposes of updating a column store database. For example, the combination of MRC and MAC migration techniques in any configuration disclose a *Migration Hybrid* migration technique.

Previously, metadata collected for the column store database indicates what attribute vectors have been built, and over what record ranges of information (e.g., primary key ranges) are covered within those attribute vectors. As a result, the metadata can be consulted at analytic query run time (for example by the query/transaction manager 820) to decide whether or not there is a need to build/enhance the referenced attribute vectors. Further, the metadata for a column store database can be persisted to disk in case of system crashes. As metadata is referenced often, metadata should also be cached in memory buffer for quick access, in one embodiment.

Additionally, in embodiments of the present invention, the metadata includes the specific point for an attribute vector where deltas have been applied. That is, in the log file for the row store database, LSNs are collected for each log entry, wherein the LSN is a monotonically increasing number showing the sequence number for each log entry. The latest LSN of a committed transaction to the row store database in the migration buffer at run time of a query is used to represent the changes that have been migrated up to that point for a corresponding attribute vector in the column store database. Up to this point, the information in the column store database is synchronized with the row store database. That latest LSN as the new and/or updated synchronization point is saved as metadata for the column store database.

As such, the process of updating at 935 in flow chart 900 includes determining a synchronization point for the first attribute vector. The synchronization point indicates to which point, in time or other ordering sequence, the first attribute vector was last updated. For example, the synchronization point is associated with an LSN, and indicates the last change transaction that was performed on the first attribute vector of the column store database. As such, by including the change transactions committed after the LSN, the first attribute vector will be synchronized with the row store database in real time.

As such, when the first attribute vector is already built for a column, and the referenced range (e.g., of primary keys) is also covered, then the updating includes incorporating all the changes or deltas from the last access, or last synchronization point. As previously described, this includes accessing log data corresponding to change transactions after the synchronization point, wherein the log data that is accessed is directed to first attributes in the first attribute vector. In one embodiment, the log data includes after image information that can be directly used to update corresponding entries in the first attribute vector. For instance, the after image comprises a snapshot of the value for a corresponding entry in the first attribute vector.

In addition, the latest LSN is saved to metadata when an attribute vector is first built; and when changes are made to the covered intervals (e.g., primary keys) by expanding to some uncovered intervals. For these two cases, instead of using log data for change transactions, the latest table records from row store is fetched directly without looking at the log data for the row store database. The latest LSN, or synchronization point, quickly indicates up to what time data is current for the covered intervals of that attribute vector for a particular attribute vector.

Furthermore, in another embodiment, additional steps may be taken to build or enhance the covered ranges of attribute vectors that are referenced by a query. As previously described in FIGS. 3A-B, a full table scan or partial table scan of the row store database is performed using a scan operator to either build or enhance the attribute vector for each referenced column in the column store database when a query is executed on the row store database. That is, when the covered range (e.g., primary keys) of an attribute vector does not encompass the queried range of the attribute vector that is referenced by a query, the attribute vector is built and/or enhanced adaptively to the query at run time. For instance, when the first referenced attribute does not correspond to any attribute vectors in the column store database, an attribute vector corresponding to the first referenced attribute is built. In particular, a queried range of attributes is determined, wherein the first analytic query is directed to the queried range, and values for the first attributes over the queried range are imported directly from the corresponding entries in the row store database.

### TWO STAGE MIGRATION OF CHANGES TO COLUMN STORE DATABASE

As previously described, a two stage operation is implemented to migrate changes made to a row store database to a corresponding column store database at query run time. FIG. 11 is a data flow diagram illustrating the two stage operation including the flow of log information corresponding to change transactions referencing attribute vectors in a column store database, in accordance with one embodiment of the present disclosure.

As shown in FIG. 11, change transactions are applied to a row store database 1105. In particular, the changes corresponding to change transactions are stored in the database buffer 1110. These changes are also applied to the data records stored on disk 1130, which includes one or more of volatile (e.g., main memory or RAM) or non-volatile (e.g., persistent) storage. In addition, information related to the changes are also generated and stored in a log file/record. In one embodiment, the log file/record is generated in association with a page of memory, which is smallest unit of a fixed-length, contiguous block of virtual memory. The log file/record is added to the log page buffer 1120, and persisted to disk 1140 when the transaction is committed to the row store database 1105. In one embodiment, a transaction has committed when the changes are recorded to the log file/record on disk 1140.

In the first stage, the column store database 1150 is derived from the row store database 1105, with the row store database 1105 acting as the source of truth. In one embodiment, the 'Write Ahead Protocol' is reconfigured to migrate relevant changes to the column store database 1150. Specifically, a separate migration buffer 1155 holds all the changes in memory, wherein the changes are later applied to the column store database 1150. As previously described, in the first stage, not all of the information stored in the log page buffer 1120 is duplicated to the migration buffer 1155. Instead, during a transaction commit operation for the row store database 1105, a subset of changes and/or change transactions is extracted and migrated to the migration buffer 1155, wherein the changes meet the following three conditions, as previously described and briefly summarized, as follows: (1) those columns with attribute vectors already built, (2) the changes are in the covered intervals; and (3) the changes in the committed transactions. The uncommitted changes (or later aborted changes) will be skipped. As previously described, the column store database migration manager 827 within the query/transaction manager 820 of FIG. 8 is configured to determine which change transactions are directed to existing attribute vectors in the column store database based on log record/file data. For instance, the column identifiers listed in the log record/file are matched with column metadata, wherein the metadata indicates which attribute vectors exist in the column store database, and over what ranges.

The changes added to the migration buffer 1155 of the column store database 1150 are included in a log record/file, which includes information such as, Table ID, Column ID, and the after image for a given column so that the system can apply the changes to the corresponding attribute vectors properly. FIG. 12 is an illustration of a row store log data/information format of a row store database, wherein the log information in log entry 1200 corresponds to a change transaction that references at least one attribute vector in a column store database, in accordance with one embodiment of the present disclosure. For instance, the change transaction may be associated with txn 1029 of FIG. 10. For purposes of illustration, the log entry 1200 includes LSN information in block 1201 for a change operation within the transaction 1029, which is stored as a transaction ID in block 1202 (e.g., txn 1029). For example, the change operation is the *insert* employee record statement with LSN 2. The log entry 1200 includes a Table ID in block 1203 (e.g., referring back to employee table). The transaction ID allows for multiple statements to be grouped together, such as the two *insert* statements to two different tables (e.g., an employee table and a department table). In addition, one or more blocks 1204A-N each include a column ID/value pair of information, wherein a corresponding column ID indicates which column in the row store database, and a related attribute vector/column in the column store database, are associated with the change transaction. The corresponding value in a column ID/value pair in any of the blocks 12051204A-N may include an after image of a record which is stored during updating. As shown, the first stage occurs during *insert*/*delete*/*update* transactions.

Changes for those columns that do not have corresponding attribute vectors or that are not made to entries in corresponding attribute vectors are not migrated to the migration buffer 1155 for the column store database 1150. This is because, when a column is first referenced in the scan operation of a query, a corresponding attribute vector is built directly from the table records in the row store database 1105. The table records will contain the most up-to-date content, and as such no migration of change information is necessary since it will be redundant.

In another case, even though an attribute vector for a column exists and is built, changes to uncovered ranges/intervals are not migrated. Later, when a query references those column values in an uncovered interval, the attribute vector is enhanced by fetching column data directly from the table records in the row store database 1105. For example, as previously described in FIGS. 3A-B, a full table scan or partial table scan of the row store database is performed using a scan operator to either build or enhance the attribute vector for each referenced column in the column store database when a query is executed on the row store database.

The first stage of migration should have minimal impact on OLTP performance, as it copies into memory only a subset information from the log buffer 1120 of the row store database 1105 to the migration buffer 1155 of the column store database 1150. As such, there is no additional disk I/Os introduced during the commit process for the row store database 1105. Besides, the column store 1150 maintains its own log buffer 1155 and log file to handle its log information including changes.

The previously introduced employee table is used to illustrate the migration process for the first and second stages. The employee table includes attributes for employee number (EmpNo); employee name (Name); gender (Gender); department number (DeptNo); start date (StartDate); title (DeptNo); salary (Salary); and comment. In addition, the corresponding column store database includes five attribute vectors for columns EmpNo, Name, DeptNo, StartDate, and Salary after the last received analytics query.

The following INSERT statement inserts a new record into Employee table of the row store database.

```
      INSERT Employee VALUES (9051, 'John Smith', 'M',
      201, '01/02/2014', 'Engineer', 90000.00, 'First
      employee in year 2014');
```

During the transaction commit for the row store database, changes for the new record are copied into the migration buffer for those five referenced columns with attribute vectors already built, and made to respective covered ranges or intervals.

FIG. 13A is a Unified Modeling Language (UML) sequence diagram 1300A illustrating the flow of data during the first stage of updating a column store database involving the storing of log information corresponding to change transactions referencing attribute vectors in a column store database for the INSERT statement listed above, in accordance with one embodiment of the present disclosure. At 1301, the INSERT statement is received by the transaction manager 1350 requesting the insertion of eight attribute values into the row store database. At 1305, a new record is entered into the row store database, and more specifically into the row data buffer 1351 (e.g., non-persistent main memory) associated with the row store database. At 1310, the after image is written for each of the eight attributes in the employee table into the row log buffer 1353 (e.g., main memory) associated with the row store database. Later, at 1315, the end transaction is written to disk, and more specifically to the row log buffer 1353 (e.g., main memory) associated with the row store database. At this time, the transaction has been committed to the row store database. In addition, up to this point, all operations are consistent with making changes to a row store database.

In the first stage of migration to the column store database, at 1320, the change information for the five attribute vectors associated with columns in the column store database is migrated (for example, by the query/transaction manager and/or row store log manager). That is, log information for the subset of changes satisfying the previously introduced conditions is obtained from the row log buffer 1353 and migrated to the migration buffer 1355 associated with the column store database. At 1325, a function call is returned to the row log buffer 1353 and provides notification to the row log buffer 1353 that the migration of log information to the migration buffer 1355 is complete.

In turn, returning back to the making changes to the row store database, at 1330, the row log buffer 1353 writes the end transaction to the row log file 1354 associated with the row store database. The log file 1354 can be persistent. At 1335 and 1340, function calls are returned to the row log buffer 1353 and the transaction manager 1350 so that the transaction manager 1350 knows when the transaction has been committed. Thereafter, at 1345, an instruction is sent from the transaction manager 1350 to the row data buffer to flush the data. At 1347, the data is flushed from the row data buffer 1351 and written to the row data file 1352. In one case, the row data file 1352 is persistently stored to disk. At this point, the change transaction for the row store database is complete.

When a query runs, the second stage of migration kicks in to apply the change data to the corresponding attribute vectors that are referenced by the query. Three different migration techniques are disclosed for migrating changes to the column store database, based on when the changes are applied, and in what amounts. In any of the three techniques, in the second stage, the change data migrated at some point to the migration buffer is applied to the attribute vectors of the column store database. The first migration technique is referred to as *Migrate Referenced Columns Only* (MRC). The second migration technique is referred to as *Migrate All Columns* (MAC). The third migration technique is a hybrid of the MRC and MAC migration techniques.

### Migrate Referenced Columns (MRC)

At its core, changes are applied at least to attribute vectors referenced by a query. In particular, in MRC, only changes to attribute vectors for those columns referenced in a given query are migrated starting from the last committed transaction migrated to the corresponding attribute vector. Specifically, for a referenced column, the last committed LSN for changes to the column is determined from metadata in the migration file. At that point, beginning from the change transaction of the last committed LSN, MRC scans forward to locate committed changes to the row store database and apply those changes to the attribute vector corresponding to the given referenced column. These unmigrated but committed changes are stored in the migration buffer for the column store database. In MRC, all changes made to columns other than the referenced columns are ignored. For example, MRC is introduced previously in relation to FIG. 9.

In MRC, a new *LSNᵢ*, or synchronization point, for a given reference column *Cᵢ* is saved into its corresponding metadata for future reference. As such, each attribute vector has its own LSN saved in the metadata. Also, the migration file for the column store database can be scanned once for each referenced column. As such, if there are multiple referenced columns, it is possible to scan the migration file for the column store database once, and sort it based on table ID and column ID. After sorting, one thread may be used per referenced column to migrate the changes to the corresponding attribute vector. In this manner, the migration task can be parallelized in order to speed up the operation.

In one embodiment, MRC is configurable to batch many changes to a given column and perform the changes in a single batch. In addition, MRC keeps the idea of 'just-in-time' and 'just-enough' approach to a high degree.

Continuing with the example provided above with reference to FIG. 13A, after the INSERT statement, an analytic query is received, as follows:

```
      SELECT DeptNo, SUM(salary)FROM Employee GROUP BY
      DeptNo;
```

Using the MRC technique, changes for DeptNo and salary columns are migrated to their corresponding attribute vectors in order to satisfy the query. Other changes made to unreferenced columns, such as EmpNo, Name, and StartDate are skipped.

After the above SELECT query, in MRC the entire column store is not in a consistent database state as some attribute vectors will receive and update the latest changes, while others do not. However, the referenced columns of a query are in a consistent state, and synchronized with the row store database. As such, the referenced columns, or attribute vectors, are dynamically built up and updated just-in-time and adaptively for the above query, because their contents are updated to show the latest changes made to the row store right up to the point before the query result was presented.

FIG. 13B is a UML sequence diagram 1300B illustrating the flow of data during the second stage of updating a column store database using MRC and involves the use of log information corresponding to change transactions referencing attribute vectors in a column store database for the SELECT statement listed above, in accordance with one embodiment of the present disclosure. The applied changes correspond to the previously stored change transactions in stage one, in accordance with one embodiment of the present disclosure.

At 1370, the SELECT query is received by the query/transaction manager 1350. At 1373, the LSN corresponding to the last synchronization point is retrieved from the column metadata for each referenced attribute vector. That is, in MRC a synchronization point is generated independently for each attribute vector, and as such different attribute vectors may have different synchronization points. At 1375, the LSN for the synchronization point is used to determine which changes need to be fetched for a given attribute vector. Specifically, changes are fetched from the migration buffer 1355 beginning from the synchronization point of the corresponding attribute vector. In one implementation, the changes have higher LSNs than the LSN of the synchronization point. As previously described, a change may be an after image that is stored in the entry for the attribute vector at the last synchronization point.

At 1377, if the changes are not located in the migration buffer (e.g., due to overflow), then the changes are optionally fetched out of memory from the migration file 1358 (e.g., persistent storage). At 1379, changes are read and stored back into the migration buffer 1355 for processing.

In particular, fetched changes are applied to the column store database. That is, at 1381, the changes for the DeptNo and salary columns are stored to the column data buffer 1359.

At 1383, the LSN, or synchronization point, in the column metadata 1356 is updated to the most recent LSN, such as, the LSN of the last committed transaction, or the query. At 1385, the new LSN corresponding to the synchronization point of the attribute vector is stored in the column log manager 1361.

In addition, at 1387, the data required by the query that has been updated is returned to the query/transaction manager 1350 for execution of the query. At 1389, an instruction from the query/transaction manager 1350 is presented to the column data buffer 1359 to flush the updated data. At 1391, the updated data is written to the column data file 1360.

FIG. 13C is an illustration of an exemplary MRC algorithm 1300C implemented for providing real-time analytical results by dynamically and adaptively updating a column store database by importing a targeted amount of data to referenced attribute vectors in order to satisfy an analytic query, in accordance with one embodiment of the present disclosure. The MRC algorithm 1300C assumes that the migration buffer for the column store database contains only committed changes. In addition, the MRC algorithm 1300C migrates the changes for the columns only referenced by a query, starting from the last commit of a given referenced column.

### Migrate All Columns (MAC)

The second migration technique is referenced as *Migrate All Columns* (MAC). In MAC, the last synchronization point for all the attribute vectors in the column store database is determined. From that point, MAC scans forward through all the subsequent changes until the last committed LSN in the migration buffer, which is the most up-to-date transaction. The scanned and committed changes are then applied to all the corresponding attribute vectors, even if a column is not referenced in the given query. As such, the MAC algorithm may update some of the attribute vectors sooner than they are needed.

In MAC, the same log sequence number used to indicate the latest transaction and the most current point for the row store database can also be used for the entire column store database, and more particularly to each of the attribute vectors in the column store. This is because all of the changes in the migration buffer, and since the last synch point, are applied to all of the attribute vectors in the column store database. This simplifies the content of the log file used in column store because only one LSN for a synchronization point need be written to the log file, after migrating changes to column store. For instance, after migration to the column store database, the latest LSN associated with the latest committed change transaction to the row store database (e.g., in the migration buffer) is used as the new and/or updated synchronization point.

FIG. 14A is a flow diagram 1400A illustrating a method for providing real-time analytical results by dynamically and adaptively updating all of the attribute vectors in a column store database in response to executing an analytic query, such as when implementing a MAC migration technique, in accordance with one embodiment of the present disclosure. In one embodiment, flow diagram 1400A illustrates a computer implemented method for providing real-time analytical results by dynamically and adaptively updating all of the attribute vectors in a column store database in response to executing an analytic query. In another embodiment, flow diagram 1400A is implemented within a computer system including a processor and memory coupled to the processor and having stored therein instructions that, if executed by the computer system causes the system to execute a method for providing real-time analytical results by dynamically and adaptively updating all of the attribute vectors in a column store database in response to executing an analytic query. In still another embodiment, instructions for performing the method are stored on a non-transitory computer-readable storage medium having computer-executable instructions for providing real-time analytical results by dynamically and adaptively updating all of the attribute vectors in a column store database in response to executing an analytic query. The operations of flow diagram 1400A are implemented within the database system 100 and/or database system 800 of FIGS. 1 and 8, respectively, in some embodiments of the present disclosure

The method outlined in flow diagram 1400A optionally proceeds back to 1410, to operation 935 in flow diagram 900, and/or to connecting point B used in flow diagrams 15, in embodiments. In that manner, the MRC and MAC migration techniques may be combined in any manner for purposes of updating a column store database. For example, the combination of MRC and MAC migration techniques in any configuration disclose a *Migration Hybrid* migration technique.

At 1410, the method includes determining a synchronization point for each attribute vector indicating to which point in time the column store database (e.g., in its entirety) was last updated, wherein the synchronization point corresponds to the log sequence number associated with when the last previously received analytic query was executed (e.g., the LSN of the last committed change transaction stored in the migration buffer during execution of the query). That is, the synchronization point applies universally to each attribute vector in the column store database. As such, only one synchronization point need be stored for the column store database.

At 1420, the method includes accessing log data corresponding to change transactions after the synchronization point. Specifically, all of the change transactions received after the last synchronization point are determined and accessed. For instance, after image information for the change transactions is accessed.

At 1430, the method includes updating the plurality of attribute vectors based on the log data, wherein the log data corresponds to the change transactions collected after the synchronization point. That is, all of the changes are applied in order to update the column store database. At this point, the data saved in the column store database are synchronized with their corresponding data in row store database.

At 1440, the method includes setting the synchronization point as applied to all attribute vectors in the column store database to correspond to the first analytic query. That is, the new synchronization point for the entire column store is set to the last committed change transaction recorded in the migration buffer. At 1450, the system clears the memory space from migration buffer after the change data are migrated to the attribute vectors.

The method outlined in flow diagram 1400A optionally proceeds to operation 1410, operation 915 in flow diagram 900 of FIG. 9 to continue using the MRC technique during stage 1 and/or stage 2, and/or connecting point B used in flow diagram 1500 of FIG. 15, in embodiments. In that manner, the MRC and MAC migration techniques may be combined in any manner for purposes of updating a column store database. For example, the combination of MRC and MAC migration techniques in any configuration disclose a *Migration Hybrid* migration technique.

Typically, in the MAC migration technique, there is no need to maintain a large migration file. This is because the migration buffer will typically not reach capacity since the frequency of analytic queries running is enough to continually clear the migration buffer before it overflows. Even if there are minimal or no analytic quires running for a period of time, and the migration buffer becomes full, the system can always execute MAC algorithm at that time. That is the change data in the migration buffer can be applied to attribute vectors in column store when the migration buffer is full, hence releasing the space from the migration buffer.

Using the example provided above with reference to FIG. 13A, after the INSERT statement, the same analytic query (e.g., SELECT statement is received, but now processed using the MAC migration technique, as follows:

```
      SELECT DeptNo, SUM(salary)FROM Employee GROUP BY
      DeptNo;
```

As previously described, five attribute vectors have been built in the column store database for columns EmpNo, Name, DeptNo, StartDate, and Salary after processing the last analytics query. Subsequently received insert statements will insert one or more new records into the Employee table, previously introduced. During transaction commit to the row store, the changes for the new record are copied into the migration buffer for those above referenced five columns with attribute vectors already built.

Using the MAC migration technique, all the changes in the migration buffer are applied to the five columns and their corresponding attribute vectors, respectively, in the column store database. After the above SELECT query is executed, all the attribute vectors in the column store are in a consistent state as they all are updated with the latest changes.

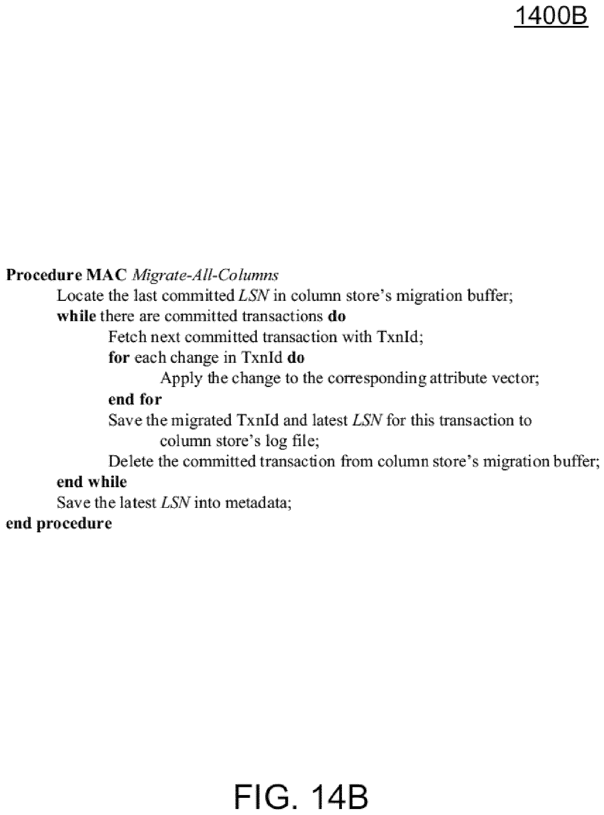

FIG. 14B is an illustration of an exemplary algorithm 1400B implemented for providing real-time analytical results by dynamically and adaptively updating a column store database by importing all of the change data for attribute vectors in a column store database in order to satisfy an analytic query, such as, when implementing a MAC migration technique, in accordance with one embodiment of the present disclosure. The MAC algorithm 1400B assumes the migration buffer for the column store database contains only committed changes. In addition, the MAC algorithm 1400B migrates all the changes for the columns starting from the last synchronization point to the last committed transaction to any column.

### Migrate Hybrid

The third migration technique, which is is referenced as *Migrate Hybrid,* provides the benefits of both MRC and MAC migration techniques. Most of time, the *Migrate Hybrid* technique refreshes those columns referenced in a query while keeping the 'just-in-time' and 'just-enough' design philosophy. This is accomplished using the MRC migration technique as the default process. Occasionally, the MAC migration technique is used over the MRC migration technique when the migration buffer reaches a threshold, and is reaching capacity.

In one implementation, a reasonably large migration buffer is allocated (e.g., 50 to 100 megabytes). The MRC migration technique is used when a query is going to run in order to update the column store database. That is, most of time, the MRC migration technique is used to refresh those columns referenced in a query while keeping the 'just-in-time' and 'just-enough' design philosophy. Additionally, the MAC migration technique is used when memory space for migration buffer reaches a threshold (e.g., reaches capacity). That is, the MAC algorithm will be invoked when memory space for migration buffer is full. As such, the *Migrate Hybrid* migration technique keeps the benefit of both the MRC and the MAC migration techniques. In this manner there is no need to keep a migration file in column store. That is, a migration file is unnecessary, since the information in the migration buffer is migrated to the attribute vectors whenever it reaches a threshold.

FIG. 15 is a flow diagram 1500 illustrating a method for providing real-time analytical results (e.g., through the implementation of the *Migrate Hybrid* migration technique) by dynamically and adaptively updating referenced attribute vectors in a column store database by importing a targeted amount of data to referenced attribute vectors in order to satisfy an analytic query, and by dynamically and adaptively updating all of the attribute vectors in a column store database when a migration buffer containing change transactions from a synchronization point has reached a threshold, in accordance with one embodiment of the present disclosure. In one embodiment, flow diagram 1500 illustrates a computer implemented method for providing real-time analytical results (e.g., through the implementation of the *Migrate Hybrid* migration technique) by dynamically and adaptively updating referenced attribute vectors in a column store database by importing a targeted amount of data to referenced attribute vectors in order to satisfy an analytic query, and by dynamically and adaptively updating all of the attribute vectors in a column store database when a migration buffer containing change transactions from a synchronization point has reached a threshold. In another embodiment, flow diagram 1500 is implemented within a computer system including a processor and memory coupled to the processor and having stored therein instructions that, if executed by the computer system causes the system to execute a method for providing real-time analytical results (e.g., through the implementation of the *Migrate Hybrid* migration technique) by dynamically and adaptively updating referenced attribute vectors in a column store database by importing a targeted amount of data to referenced attribute vectors in order to satisfy an analytic query, and by dynamically and adaptively updating all of the attribute vectors in a column store database when a migration buffer containing change transactions from a synchronization point has reached a threshold. In still another embodiment, instructions for performing the method are stored on a non-transitory computer-readable storage medium having computer-executable instructions for providing real-time analytical results (e.g., through the implementation of the *Migrate Hybrid* migration technique) by dynamically and adaptively updating referenced attribute vectors in a column store database by importing a targeted amount of data to referenced attribute vectors in order to satisfy an analytic query, and by dynamically and adaptively updating all of the attribute vectors in a column store database when a migration buffer containing change transactions from a synchronization point has reached a threshold. The operations of flow diagram 1500 are implemented within the database system 100 and/or database system 800 of FIGS. 1 and 8, respectively, in some embodiments of the present disclosure.

The method outlined in flow diagram 1500 optionally begins from connecting points A or B used in flow diagrams 9, 14A and 15, in one embodiment. In that manner, the MRC and MAC migration techniques may be combined in any manner for purposes of updating a column store database. For example, the combination of MRC and MAC migration techniques in any configuration disclose a *Migration Hybrid* migration technique. In general, in the *Migration Hybrid* migration technique, if the database system runs out of memory space in the migration buffer, then use the MAC migration technique, else use the MRC migration technique.

More specifically, at 1510, the method includes storing change transactions in the subset of change transactions in a buffer. That is, change transactions that meet the three conditions for inclusion within the subset, and committed since the last synchronization point are stored in the migration buffer. The three conditions include (1) those columns with attribute vectors already built, (2) the changes are in the covered intervals; and (3) the changes in the committed transactions. For example, the selection and storing of change transactions may be implemented through the MRC migration technique.

At 1520, the method includes determining whether the migration buffer has reached a threshold. The determination is performed for each change transaction that is migrated to the migration buffer. If the migration buffer has reached the threshold (e.g., is full), then the method proceeds to connecting point A in flow diagram 14A to perform the MAC migration technique to migrate change data to the column store database, and to clear the migration buffer. At this point, no analytic query has been received.

On the other hand, if the migration buffer has not reached the threshold, then the method proceeds to 1530 and continues with stage 1 of the MRC technique. In particular, operations 915, 920, and 925 are performed to identify change transactions meeting the three previously defined conditions for migration to the buffer.

Again, for each change transaction that is migrated to the migration buffer, the method determines whether analytic query has been received at 1540. If a query has been received, then in the *Migration Hybrid* migration technique stage 2 of the MRC migration technique is performed during the execution of the analytic query. Specifically, operations 930 and 935 are performed to migrate relevant change data to update referenced attribute vectors in the column store database in order to process the analytic query. On the other hand, if a query has not been received, then the method returns to 1510 and continues the selection and storing of change transactions which may be implemented through the MRC migration technique.

As shown in flow diagram 1500, the MRC and MAC migration techniques may be combined in any manner for purposes of updating a column store database. For example, the combination of MRC and MAC migration techniques in any configuration disclose a *Migration Hybrid* migration technique. Clearly, Migrate Hybrid algorithm is a preferred embodiment as it can keep the advantages of both MRC and MAC algorithms, without having the disadvantages of either one.

### System Recovery

After a system crash, row store database is recovered first, as the row store database is defined as the source of truth. After the row store finishes the recovery operation, the column store database can be recovered based on the values in the row store database.

In particular, *suppose LSN_{R} is* the latest log sequence number saved in the log file for the row store database. Also, the *LSNc* is the latest log sequence number saved in the metadata for the column store database. The values for *LSN_{R}* with *LSNc* are compared to each other. If *LSNc* is less than *LSN_{R},* then the column store database still has a gap in terms of its data. As such, during the recovery process for the column store database, the value for *LSNc* is located in the log file for the row store database. The data is recovered by copying the committed changes to the migration buffer of the column store database using the stage one migration process previously described. Thereafter, the column store will be updated during the second stage of the previously described migration techniques (e.g., MRC, MAC, *Migration Hybrid*) when a query scan operation is invoked. As the data in the column store database is not changed on disk during recovery, the entire system recovery operation of the hybrid row/column store databases will consume about same amount of time as a system recovery process dedicated to the row store database.

Thus, according to embodiments of the present disclosure, systems and methods are described for adaptively building a column store database from a row store database to satisfy an analytic query directed to referenced attribute vectors or columns. Other embodiments of the present disclosure are described for adaptively building and updating a column store database from a row store database to satisfy an analytic query directed to referenced attribute vectors or columns.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered as examples because many other architectures can be implemented to achieve the same functionality.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

While various embodiments have been described and/or illustrated herein in the context of fully functional computing systems, one or more of these example embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. These software modules may configure a computing system to perform one or more of the example embodiments disclosed herein. One or more of the software modules disclosed herein may be implemented in a cloud computing environment. Cloud computing environments may provide various services and applications via the Internet. These cloud-based services (e.g., software as a service, platform as a service, infrastructure as a service, etc.) may be accessible through a Web browser or other remote interface. Various functions described herein may be provided through a remote desktop environment or any other cloud-based computing environment.

Although the present invention and its advantages have been described in detail, it should be understood that various changes, substitutions, and alterations can be made herein without departing from the scope of the invention as defined by the appended claims. Many modifications and variations are possible in view of the above teachings. The embodiments were chosen and described in order to best explain the principles of the invention and its practical applications, to thereby enable others skilled in the art to best utilize the invention and various embodiments with various modifications as may be suited to the particular use contemplated.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention.

Embodiments according to the present disclosure are thus described. While the present disclosure has been described in particular embodiments, it should be appreciated that the disclosure should not be construed as limited by such embodiments, but rather construed according to the below claims.

## Claims

1. A computer system for updating a database system, comprising:
memory having stored therein computer-executable instructions;
a row store database (150) for storing data, wherein at least one row of said row store database (150) comprises a plurality of attributes; and
a processor executing said computer-executable instructions, wherein the processor is configured for adaptively building a column store database (170) from the row store database (150);
wherein the processor is configured for establishing (910) the column store database (170) comprising data structured to satisfy received analytic queries, the processor is configured for beginning from an initial state of the column store database (170), for a currently executing analytic query executing at the column store database (170), importing a targeted amount of data from a corresponding temporal state of the row store database (150) into the column store database (170) to satisfy the currently executing analytic query;
wherein said column store database (170) comprises a plurality of attribute vectors corresponding to at least one attribute in said row store database (150), wherein said plurality of attribute vectors comprises data used to satisfy at least one of a plurality of previously received analytic queries, and wherein each attribute vector includes a pair of information comprising a primary key and a value;
said instructions including:
receiving (915) a plurality of change transactions directed to said row store database, wherein said plurality of change transactions are ordered; and
when a referenced attribute referenced by the currently executing query corresponds to a first attribute vector in said column store database (170), updating (935) the first attribute vector based on log information corresponding to change transactions directed to said referenced attribute to satisfy the currently executing analytic query;
wherein said updating said first attribute vector in said instructions comprises:
determining a synchronization point for said first attribute vector indicating to which point in time said first attribute vector was last updated; and
accessing log information corresponding to change transactions after said synchronization point, wherein said log information that is accessed is directed to attributes in said first attribute vector;
wherein said log information includes after image information and the after image information comprises a snapshot of said value for said corresponding pair of information in the first attribute vector.

2. The computer system of Claim 1, wherein said instructions executed by said processor further comprises:
executing said plurality of change transactions on said row store database;
determining a subset of change transactions taken from said plurality of change transactions directed to attributes stored within said plurality of attribute vectors;
storing log information corresponding to said subset of change transactions; and
receiving said analytic query, wherein said analytic query is directed to said referenced attribute in said plurality of attributes.

3. The computer system of Claim 2, wherein said determining a subset of change transactions in said instructions comprises:
determining that a change transaction in said subset of change transactions is directed to an existing attribute vector in said column store database;
determining that said change transaction is directed to data within a covered range in said existing attribute vector; and
determining that said change transaction comprises a committed transaction.

4. The computer system of Claim 1, wherein said instructions executed by said processor further comprises:
determining a synchronization point for at least one attribute vector indicating to which point in time said column store database was last updated, wherein said synchronization point corresponds to a log sequence number associated with execution of a last previously received analytic query;
accessing log information corresponding to change transactions after said synchronization point;
updating said plurality of attribute vectors based on said log information corresponding to change transactions after said synchronization point; and
setting said synchronization point for at least one attribute vector in said column store database to correspond to said analytic query.

5. The computer system of Claim 1, wherein said instructions executed by said processor further comprises:
storing change transactions in said subset of change transactions in a buffer;
determining that said buffer has reached a threshold of used memory space;
updating at least one attribute vector in said column store database based on said log information beginning from a synchronization point, wherein said synchronization point for said at least one attribute vector in said column store database corresponds to a log sequence number associated with execution of a last previously received analytic query;
setting said synchronization point for said at least one attribute vector in said column store database to correspond to said analytic query; and
clearing said buffer.

6. The computer system of Claim 1, wherein said instructions executed by said processor further comprises:
when said attribute does not correspond to any attribute vectors in said column store database, creating a second attribute vector corresponding to said attribute;
determining a queried range of attributes, wherein said analytic query is directed to said queried range;
and importing attributes in said queried range from corresponding entries in said row store database.

7. A method for adaptively building and updating a column store database (170) from a row store database (150), comprising;
establishing said row store database (150) for storing data, wherein at least one row of said row store database (150) comprises a plurality of attributes;
establishing said column store database (170) comprising data structured to satisfy received analytic queries, thereby beginning from an initial state of the column store database (170), for a currently executing analytic query executing at the column store database (170), importing a targeted amount of data from a corresponding temporal state of the row store database (150) into the column store database (170) to satisfy the currently executing analytic query;
wherein said column store database (170) comprises a plurality of attribute vectors corresponding to at least one attribute in said row store database (150), wherein said plurality of attribute vectors comprises data used to satisfy at least one of a plurality of previously received analytic queries, and wherein each attribute vector includes a pair of information comprising a primary key and a value;
receiving a plurality of change transactions directed to said row store database (150), wherein said plurality of change transactions are ordered; and
when a referenced attribute referenced by the currently executing analytic query corresponds to a first attribute vector in said column store database (170), updating the first attribute vector based on log information corresponding to change transactions directed to said referenced attribute to satisfy the currently executing analytic query;
wherein said updating said first attribute vector comprises:
determining a synchronization point for said first attribute vector indicating to which point in time said first attribute vector was last updated; and
accessing log information corresponding to change transactions after said synchronization point, wherein said log information that is accessed is directed to attributes in said first attribute vector;
wherein said log information includes after image information and the after image information comprises a snapshot of said value for said corresponding pair of information in the first attribute vector.

8. The method of Claim 7, further comprising:
executing said plurality of change transactions on said row store database;
determining a subset of change transactions taken from said plurality of change transactions directed to attributes stored within said plurality of attribute vectors;
storing log information corresponding to said subset of change transactions; and
receiving said analytic query, wherein said analytic query is directed to said referenced attribute in said plurality of attributes.

9. The method of Claim 8, wherein said determining a subset of change transactions comprises:
determining that a change transaction in said subset of change transactions is directed to an existing attribute vector in said column store database;
determining that said change transaction is directed to data within a covered range in said existing attribute vector; and
determining that said change transaction comprises a committed transaction.

10. The method of Claim 7, further comprising:
determining a synchronization point for at least one attribute vector indicating to which point in time said column store database was last updated, wherein said synchronization point corresponds to a log sequence number associated with execution of a last previously received analytic query;
accessing log information corresponding to change transactions after said synchronization point;
updating said plurality of attribute vectors based on said log information corresponding to change transactions after said synchronization point; and
setting said synchronization point for said at least one attribute vector in said column store database to correspond to said analytic query.

11. The method of Claim 7, further comprising:
storing change transactions in said subset of change transactions in a buffer;
determining that said buffer has reached a threshold of used memory space;
updating at least one attribute vector in said column store database based on said log information beginning from a synchronization point, wherein said synchronization point for said at least one attribute vector in said column store database corresponds to a log sequence number associated with execution of a last previously received analytic query;
setting said synchronization point for said at least one attribute vector in said column store database to correspond to said analytic query; and
clearing said buffer.

12. The method of Claim 7, further comprising:
when said attribute does not correspond to any attribute vectors in said column store database, creating a second attribute vector corresponding to said attribute;
determining a queried range of attributes, wherein said analytic query is directed to said queried range;
and importing attributes in said queried range from corresponding entries in said row store database.

13. The method of Claim 7, wherein said updating said first attribute vector comprises:
updating said first attribute vector with a plurality of after images in said log information.

14. A non-transitory computer-readable storage medium having computer-executable instructions for causing a computer system to perform the method of any one of claims 7 to 13.

## Patentansprüche

1. Computersystem zum Aktualisieren eines Datenbanksystems, umfassend:
einen Speicher, der darin gespeicherte computerausführbare Anweisungen aufweist;
eine Datenbank (150) mit Reihenspeicherung zum Speichern von Daten, wobei mindestens eine Reihe der Datenbank (150) mit Reihenspeicherung eine Vielzahl von Attributen umfasst; und
einen Prozessor, der die computerausführbaren Anweisungen ausführt, wobei der Prozessor zum adaptiven Aufbauen einer Datenbank (170) mit Spaltenspeicher aus der Datenbank (150) mit Reihenspeicherung konfiguriert ist;
wobei der Prozessor zum Einrichten (910) der Datenbank (170) mit Spaltenspeicher konfiguriert ist, umfassend die Daten, die strukturiert sind, um empfangene analytische Abfragen zu erfüllen, wobei der Prozessor zum beginnend mit einem Anfangszustand der Datenbank (170) mit Spaltenspeicher für eine gegenwärtig ausgeführte analytische Abfrage , die in der Datenbank (170) mit Spaltenspeicher ausgeführt wird, Importieren einer zielgerichteten Datenmenge aus einem entsprechenden zeitlichen Zustand der Datenbank (150) mit Reihenspeicherung in die Datenbank (170) mit Spaltenspeicherkonfiguriert ist, um die gegenwärtig ausgeführte analytische Abfrage zu erfüllen;
wobei die Datenbank (170) mit Spaltenspeicher eine Vielzahl von Attributvektoren umfasst, die mindestens einem Attribut in der Datenbank (150) mit Reihenspeicherung entsprechen, wobei die Vielzahl von Attributvektoren Daten umfassen, die verwendet werden, um mindestens eine von einer Vielzahl von zuvor empfangenen analytischen Abfragen zu erfüllen, und wobei jeder Attributvektor ein Informationenpaar beinhaltet, umfassend einen Primärschlüssel und einen Wert;
wobei die Anweisungen beinhalten:
Empfangen (915) einer Vielzahl von Änderungstransaktionen, die an die Datenbank mit Reihenspeicherung gerichtet werden, wobei die Vielzahl von Änderungstransaktionen geordnet sind; und
wenn ein referenziertes Attribut, das durch die gegenwärtig ausgeführte Abfrage referenziert wird, einem ersten Attributvektor in der Datenbank (170) mit Spaltenspeicher entspricht, Aktualisieren (935) des ersten Attributvektors basierend auf Protokollinformationen, die Änderungstransaktionen entsprechen, die an das referenzierte Attribut gerichtet werden, um die gegenwärtig ausgeführte analytische Abfrage zu erfüllen;
wobei das Aktualisieren des ersten Attributvektors in den Anweisungen umfasst:
Bestimmen eines Synchronisationspunkts für den ersten Attributvektor, der angibt, zu welchem Zeitpunkt der erste Attributvektor zuletzt aktualisiert wurde; und
Zugreifen auf Protokollinformationen, die Änderungstransaktionen entsprechen, nach dem Synchronisationspunkt, wobei die Protokollinformationen, auf die zugegriffen wird, an Attribute in dem ersten Attributvektor gerichtet werden;
wobei die Protokollinformationen Nachbildinformationen beinhalten und die Nachbildinformationen eine Momentaufnahme des Werts für das entsprechende Informationenpaar in dem ersten Attributvektor umfassen.

2. Computersystem nach Anspruch 1, wobei die durch den Prozessor ausgeführten Anweisungen ferner umfassen:
Ausführen der Vielzahl von Änderungstransaktionen in der Datenbank mit Reihenspeicherung;
Bestimmen einer Untergruppe von Änderungstransaktionen, die aus der Vielzahl der Änderungstransaktionen entnommen werden, die an Attribute gerichtet werden, die innerhalb der Vielzahl von Attributvektoren gespeichert sind;
Speichern von Protokollinformationen, die der Untergruppe von Änderungstransaktionen entsprechen; und
Empfangen der analytischen Abfrage, wobei die analytische Abfrage an das referenzierte Attribut in der Vielzahl von Attributen gerichtet wird.

3. Computersystem nach Anspruch 2, wobei das Bestimmen einer Untergruppe von Änderungstransaktionen in den Anweisungen umfasst:
Bestimmen, dass eine Änderungstransaktion in der Untergruppe von Änderungstransaktionen an einen vorhandenen Attributvektor in der Datenbank mit Spaltenspeicher gerichtet ist;
Bestimmen, dass die Änderungstransaktion an Daten innerhalb eines abgedeckten Bereichs in dem vorhandenen Attributvektor gerichtet ist; und
Bestimmen, dass die Änderungstransaktion eine festgeschriebene Transaktion umfasst.

4. Computersystem nach Anspruch 1, wobei die durch den Prozessor ausgeführten Anweisungen ferner umfassen:
Bestimmen eines Synchronisationspunkts für mindestens einen Attributvektor, der angibt, zu welchem Zeitpunkt die Datenbank mit Spaltenspeicher zuletzt aktualisiert wurde, wobei der Synchronisationspunkt einer Protokollsequenznummer entspricht, die einer Ausführung einer letzten zuvor empfangenen analytischen Abfrage zugehörig ist;
Zugreifen auf Protokollinformationen, die Änderungstransaktionen nach dem Synchronisationspunkt entsprechen;
Aktualisieren der Vielzahl von Attributvektoren basierend auf den Protokollinformationen, die Änderungstransaktionen nach dem Synchronisationspunkt entsprechen; und
Einstellen des Synchronisationspunkts für mindestens einen Attributvektor in der Datenbank mit Spaltenspeicher, um der analytischen Abfrage zu entsprechen.

5. Computersystem nach Anspruch 1, wobei die durch den Prozessor ausgeführten Anweisungen ferner umfassen:
Speichern von Änderungstransaktionen in der Untergruppe von Änderungstransaktionen in einem Puffer;
Bestimmen, dass der Puffer einen Schwellenwert von verwendetem Speicherplatz erreicht hat;
Aktualisieren mindestens eines Attributvektors in der Datenbank mit Spaltenspeicher basierend auf den Protokollinformationen beginnend mit einem Synchronisationspunkt, wobei der Synchronisationspunkt für den mindestens einen Attributvektor in der Datenbank mit Spaltenspeicher einer Protokollsequenznummer entspricht, die der Ausführung einer letzten zuvor empfangenen analytischen Abfrage zugehörig ist;
Einstellen des Synchronisationspunkts für den mindestens einen Attributvektor in der Datenbank mit Spaltenspeicher, um der analytischen Abfrage zu entsprechen; und
Löschen des Puffers.

6. Computersystem nach Anspruch 1, wobei die durch den Prozessor ausgeführten Anweisungen ferner umfassen:
wenn das Attribut keinem Attributvektor in der Datenbank mit Spaltenspeicher entspricht, Erzeugen eines zweiten Attributvektors, der dem Attribut entspricht;
Bestimmen eines abgefragten Bereichs von Attributen, wobei die analytische Abfrage an den abgefragten Bereich gerichtet ist;
und Importieren von Attributen in dem abgefragten Bereich aus entsprechenden Einträgen in der Datenbank mit Reihenspeicherung.

7. Verfahren zum adaptiven Aufbauen und Aktualisieren einer Datenbank (170) mit Spaltenspeicher aus einer Datenbank (150) mit Reihenspeicher, umfassend;
Einrichten der Datenbank (150) mit Reihenspeicherung zum Speichern von Daten, wobei mindestens eine Reihe der Datenbank (150) mit Reihenspeicherung eine Vielzahl von Attributen umfasst;
Einrichten der Datenbank (170) mit Spaltenspeicher, umfassend Daten, die strukturiert sind, um empfangene analytische Abfragen zu erfüllen, wobei dadurch beginnend mit einem Anfangszustand der Datenbank (170) mit Spaltenspeicher, für eine gegenwärtig ausgeführte analytische Abfrage, die in der Datenbank (170) mit Spaltenspeicher ausgeführt wird, eine zielgerichtete Datenmenge aus einem entsprechenden zeitlichen Zustand der Datenbank (150) mit Reihenspeicherung in die Datenbank (170) mit Spaltenspeicher importiert wird, um die gegenwärtig ausgeführte analytische Abfrage zu erfüllen;
wobei die Datenbank (170) mit Spaltenspeicher eine Vielzahl von Attributvektoren umfasst, die mindestens einem Attribut in der Datenbank (150) mit Reihenspeicherung entsprechen, wobei die Vielzahl von Attributvektoren Daten umfassen, die verwendet werden, um mindestens eine von einer Vielzahl von zuvor empfangenen analytischen Abfragen zu erfüllen, und wobei jeder Attributvektor ein Informationenpaar beinhaltet, umfassend einen Primärschlüssel und einen Wert;
Empfangen einer Vielzahl von Änderungstransaktionen, die an die Datenbank (150) mit Reihenspeicherung gerichtet werden, wobei die Vielzahl von Änderungstransaktionen geordnet sind; und
wenn ein referenziertes Attribut, das durch die gegenwärtig ausgeführte analytische Abfrage referenziert wird, einem ersten Attributvektor in der Datenbank (170) mit Spaltenspeicher entspricht, Aktualisieren des ersten Attributvektors basierend auf Protokollinformationen, die Änderungstransaktionen entsprechen, die an das referenzierte Attribut gerichtet sind, um die gegenwärtig ausgeführte analytische Abfrage zu erfüllen;
wobei das Aktualisieren des ersten Attributvektors umfasst:
Bestimmen eines Synchronisationspunkts für den ersten Attributvektor, der angibt, zu welchem Zeitpunkt der erste Attributvektor zuletzt aktualisiert wurde; und
Zugreifen auf Protokollinformationen, die Änderungstransaktionen entsprechen, nach dem Synchronisationspunkt, wobei die Protokollinformationen, auf die zugegriffen wird, an Attribute in dem ersten Attributvektor gerichtet werden;
wobei die Protokollinformationen Nachbildinformationen beinhalten und die Nachbildinformationen eine Momentaufnahme des Werts für das entsprechende Informationenpaar in dem ersten Attributvektor umfassen.

8. Verfahren nach Anspruch 7, ferner umfassend:
Ausführen der Vielzahl von Änderungstransaktionen in der Datenbank mit Reihenspeicherung;
Bestimmen einer Untergruppe von Änderungstransaktionen, die aus der Vielzahl der Änderungstransaktionen entnommen werden, die an Attribute gerichtet werden, die innerhalb der Vielzahl von Attributvektoren gespeichert sind;
Speichern von Protokollinformationen, die der Untergruppe von Änderungstransaktionen entsprechen; und
Empfangen der analytischen Abfrage, wobei die analytische Abfrage an das referenzierte Attribut in der Vielzahl von Attributen gerichtet wird.

9. Verfahren nach Anspruch 8, wobei das Bestimmen einer Untergruppe von Änderungstransaktionen umfasst:
Bestimmen, dass eine Änderungstransaktion in der Untergruppe von Änderungstransaktionen an einen vorhandenen Attributvektor in der Datenbank mit Spaltenspeicher gerichtet ist;
Bestimmen, dass die Änderungstransaktion an Daten innerhalb eines abgedeckten Bereichs in dem vorhandenen Attributvektor gerichtet ist; und
Bestimmen, dass die Änderungstransaktion eine festgeschriebene Transaktion umfasst.

10. Verfahren nach Anspruch 7, ferner umfassend:
Bestimmen eines Synchronisationspunkts für mindestens einen Attributvektor, der angibt, zu welchem Zeitpunkt die Datenbank mit Spaltenspeicher zuletzt aktualisiert wurde, wobei der Synchronisationspunkt einer Protokollsequenznummer entspricht, die einer Ausführung einer letzten zuvor empfangenen analytischen Abfrage zugehörig ist;
Zugreifen auf Protokollinformationen, die Änderungstransaktionen nach dem Synchronisationspunkt entsprechen;
Aktualisieren der Vielzahl von Attributvektoren basierend auf den Protokollinformationen, die Änderungstransaktionen nach dem Synchronisationspunkt entsprechen; und
Einstellen des Synchronisationspunkts für den mindestens einen Attributvektor in der Datenbank mit Spaltenspeicher, um der analytischen Abfrage zu entsprechen.

11. Verfahren nach Anspruch 7, ferner umfassend:
Speichern von Änderungstransaktionen in der Untergruppe von Änderungstransaktionen in einem Puffer;
Bestimmen, dass der Puffer einen Schwellenwert des verwendeten Speicherplatzes erreicht hat;
Aktualisieren mindestens eines Attributvektors in der Datenbank mit Spaltenspeicher basierend auf den Protokollinformationen beginnend mit einem Synchronisationspunkt, wobei der Synchronisationspunkt für den mindestens einen Attributvektor in der Datenbank mit Spaltenspeicher einer Protokollsequenznummer entspricht, die der Ausführung einer letzten zuvor empfangenen analytischen Abfrage zugehörig ist;
Einstellen des Synchronisationspunkts für den mindestens einen Attributvektor in der Datenbank mit Spaltenspeicher, um der analytischen Abfrage zu entsprechen; und
Löschen des Puffers.

12. Verfahren nach Anspruch 7, ferner umfassend:
wenn das Attribut keinem Attributvektor in der Datenbank mit Spaltenspeicher entspricht, Erzeugen eines zweiten Attributvektors, der dem Attribut entspricht;
Bestimmen eines abgefragten Bereichs von Attributen, wobei die analytische Abfrage an den abgefragten Bereich gerichtet ist;
und Importieren von Attributen in dem abgefragten Bereich aus entsprechenden Einträgen in der Datenbank mit Reihenspeicherung.

13. Verfahren nach Anspruch 7, wobei das Aktualisieren des ersten Attributvektors umfasst:
Aktualisieren des ersten Attributvektors mit einer Vielzahl von Nachbildern in den Protokollinformationen.

14. Nichtflüchtiges computerlesbares Speichermedium, das computerausführbare Anweisungen aufweist, zum Verursachen, dass ein Computersystem das Verfahren nach einem der Ansprüche 7 bis 13 durchführt.

## Revendications

1. Système informatique permettant de mettre à jour un système de base de données, comprenant :
une mémoire dans laquelle sont stockées des instructions exécutables par ordinateur ;
une base de données de stockage en lignes (150) pour stocker des données, au moins une ligne de ladite base de données de stockage en lignes (150) comprenant une pluralité d'attributs ; et
un processeur exécutant lesdites instructions exécutables par ordinateur, le processeur étant configuré pour construire de manière adaptative une base de données de stockage en colonnes (170) à partir de la base de données de stockage en lignes (150) ;
dans lequel le processeur est configuré pour établir (910) la base de données de stockage en colonnes (170) comprenant des données structurées pour satisfaire les requêtes analytiques reçues, le processeur est configuré pour commencer à partir d'un état initial de la base de données de stockage en colonnes (170), pour une requête analytique en cours d'exécution s'exécutant au niveau de la base de données de stockage en colonnes (170), l'importation d'une quantité ciblée de données à partir d'un état temporel correspondant de la base de données de stockage en lignes (150) dans la base de données de stockage en colonnes (170) pour satisfaire la requête analytique en cours d'exécution ;
dans lequel ladite base de données de stockage en colonnes (170) comprend une pluralité de vecteurs d'attributs correspondant à au moins un attribut dans ladite base de données de stockage en lignes (150), ladite pluralité de vecteurs d'attributs comprenant des données utilisées pour satisfaire au moins l'une d'une pluralité de requêtes analytiques précédemment reçues, et chaque vecteur d'attribut comportant une paire d'informations comprenant une clé primaire et une valeur ;
lesdites instructions comportant :
la réception (915) d'une pluralité de transactions de modification dirigées vers ladite base de données de stockage en lignes, ladite pluralité de transactions de modification étant ordonnées ; et
lorsqu'un attribut référencé par la requête en cours d'exécution correspond à un premier vecteur d'attribut dans ladite base de données de stockage en colonnes (170), la mise à jour (935) du premier vecteur d'attribut sur la base des informations de journal correspondant aux transactions de modification dirigées vers ledit attribut référencé pour satisfaire la requête analytique en cours d'exécution ;
dans lequel ladite mise à jour dudit premier vecteur d'attribut dans lesdites instructions comprend :
la détermination d'un point de synchronisation pour ledit premier vecteur d'attribut indiquant à quel moment précis ledit premier vecteur d'attribut a été mis à jour pour la dernière fois ; et
l'accès aux informations de journal correspondant aux transactions de modification après ledit point de synchronisation, lesdites informations de journal auxquelles l'accès est effectué étant dirigées vers des attributs dans ledit premier vecteur d'attribut ;
dans lequel lesdites informations de journal comportent des informations d'image après et les informations d'image après comprennent un instantané de ladite valeur pour ladite paire d'informations correspondante dans le premier vecteur d'attribut.

2. Système informatique selon la revendication 1, dans lequel lesdites instructions exécutées par ledit processeur comprennent en outre :
l'exécution de ladite pluralité de transactions de modification sur ladite base de données de stockage en lignes ;
la détermination d'un sous-ensemble de transactions de modification prises à partir de ladite pluralité de transactions de modification dirigées vers des attributs stockés à l'intérieur de ladite pluralité de vecteurs d'attributs ;
le stockage des informations de journal correspondant audit sous-ensemble de transactions de modification ; et
la réception de ladite requête analytique, ladite requête analytique étant dirigée vers ledit attribut référencé dans ladite pluralité d'attributs.

3. Système informatique selon la revendication 2, dans lequel ladite détermination d'un sous-ensemble de transactions de modification dans lesdites instructions comprend :
la détermination du fait qu'une transaction de modification dans ledit sous-ensemble de transactions de modification est dirigée vers un vecteur d'attribut existant dans ladite base de données de stockage en colonnes ;
la détermination du fait que ladite transaction de modification est dirigée vers des données dans une plage couverte dans ledit vecteur d'attribut existant ; et
la détermination du fait que ladite transaction de modification comprend une transaction validée.

4. Système informatique selon la revendication 1, dans lequel lesdites instructions exécutées par ledit processeur comprennent en outre :
la détermination d'un point de synchronisation pour au moins un vecteur d'attribut indiquant à quel moment précis ladite base de données de stockage en colonnes a été mise à jour pour la dernière fois, ledit point de synchronisation correspondant à un numéro de séquence de journal associé à l'exécution d'une dernière requête analytique précédemment reçue ;
l'accès aux informations de journal correspondant aux transactions de modification après ledit point de synchronisation ;
la mise à jour de ladite pluralité de vecteurs d'attributs sur la base desdites informations de journal correspondant aux transactions de modification après ledit point de synchronisation ; et
la définition dudit point de synchronisation pour au moins un vecteur d'attribut dans ladite base de données de stockage en colonnes pour correspondre à ladite requête analytique.

5. Système informatique selon la revendication 1, dans lequel lesdites instructions exécutées par ledit processeur comprennent en outre :
le stockage des transactions de modification dans ledit sous-ensemble de transactions de modification dans une mémoire tampon ;
la détermination du fait que ladite mémoire tampon a atteint un seuil d'espace mémoire utilisé ;
la mise à jour d'au moins un vecteur d'attribut dans ladite base de données de stockage en colonnes sur la base desdites informations de journal commençant à partir d'un point de synchronisation, ledit point de synchronisation pour ledit au moins un vecteur d'attribut dans ladite base de données de stockage en colonnes correspondant à un numéro de séquence de journal associé à l'exécution d'une dernière requête analytique précédemment reçue ;
la définition dudit point de synchronisation pour ledit au moins un vecteur d'attribut dans ladite base de données de stockage en colonnes pour correspondre à ladite requête analytique ; et
l'effacement de ladite mémoire tampon.

6. Système informatique selon la revendication 1, dans lequel lesdites instructions exécutées par ledit processeur comprennent en outre :
lorsque ledit attribut ne correspond à aucun vecteur d'attribut dans ladite base de données de stockage en colonnes, la création d'un second vecteur d'attribut correspondant audit attribut ;
la détermination d'une plage d'attributs interrogée, ladite requête analytique étant dirigée vers ladite plage interrogée ;
et l'importation des attributs dans ladite plage interrogée à partir d'entrées correspondantes dans ladite base de données de stockage en lignes.

7. Procédé permettant de construire et de mettre à jour de manière adaptative une base de données de stockage en colonnes (170) à partir d'une base de données de stockage en lignes (150), comprenant ;
l'établissement de ladite base de données de stockage en lignes (150) pour stocker des données, au moins une ligne de ladite base de données de stockage en lignes (150) comprenant une pluralité d'attributs ;
l'établissement de ladite base de données de stockage en colonnes (170) comprenant des données structurées pour satisfaire les requêtes analytiques reçues, en commençant ainsi à partir d'un état initial de la base de données de stockage en colonnes (170), pour une requête analytique en cours d'exécution s'exécutant au niveau de la base de données de stockage en colonnes (170), en important une quantité ciblée de données d'un état temporel correspondant de la base de données de stockage en lignes (150) dans la base de données de stockage en colonnes (170) pour satisfaire la requête analytique en cours d'exécution ;
dans lequel ladite base de données de stockage en colonnes (170) comprend une pluralité de vecteurs d'attributs correspondant à au moins un attribut dans ladite base de données de stockage en lignes (150), ladite pluralité de vecteurs d'attributs comprenant des données utilisées pour satisfaire au moins l'une d'une pluralité de requêtes analytiques précédemment reçues, et chaque vecteur d'attribut comportant une paire d'informations comprenant une clé primaire et une valeur ;
la réception d'une pluralité de transactions de modification dirigées vers ladite base de données de stockage en lignes (150), ladite pluralité de transactions de modification étant ordonnées ; et
lorsqu'un attribut référencé par la requête analytique en cours d'exécution correspond à un premier vecteur d'attribut dans ladite base de données de stockage en colonnes (170), la mise à jour du premier vecteur d'attribut sur la base des informations de journal correspondant aux transactions de modification dirigées vers ledit attribut référencé pour satisfaire la requête analytique en cours d'exécution ;
dans lequel ladite mise à jour dudit premier vecteur d'attribut comprend :
la détermination d'un point de synchronisation pour ledit premier vecteur d'attribut indiquant à quel moment précis ledit premier vecteur d'attribut a été mis à jour pour la dernière fois ; et
l'accès aux informations de journal correspondant aux transactions de modification après ledit point de synchronisation, lesdites informations de journal auxquelles l'accès est effectué étant dirigées vers des attributs dans ledit premier vecteur d'attribut ;
dans lequel lesdites informations de journal comportent des informations d'image après et les informations d'image après comprennent un instantané de ladite valeur pour ladite paire d'informations correspondante dans le premier vecteur d'attribut.

8. Procédé selon la revendication 7, comprenant en outre :
l'exécution de ladite pluralité de transactions de modification sur ladite base de données de stockage en lignes ;
la détermination d'un sous-ensemble de transactions de modification prises à partir de ladite pluralité de transactions de modification dirigées vers des attributs stockés à l'intérieur de ladite pluralité de vecteurs d'attributs ;
le stockage des informations de journal correspondant audit sous-ensemble de transactions de modification ; et
la réception de ladite requête analytique, ladite requête analytique étant dirigée vers ledit attribut référencé dans ladite pluralité d'attributs.

9. Procédé selon la revendication 8, dans lequel ladite détermination d'un sous-ensemble de transactions de modification comprend :
la détermination du fait qu'une transaction de modification dans ledit sous-ensemble de transactions de modification est dirigée vers un vecteur d'attribut existant dans ladite base de données de stockage en colonnes ;
la détermination du fait que ladite transaction de modification est dirigée vers des données dans une plage couverte dans ledit vecteur d'attribut existant ; et
la détermination du fait que ladite transaction de modification comprend une transaction validée.

10. Procédé selon la revendication 7, comprenant en outre :
la détermination d'un point de synchronisation pour au moins un vecteur d'attribut indiquant à quel moment précis ladite base de données de stockage en colonnes a été mise à jour pour la dernière fois, ledit point de synchronisation correspondant à un numéro de séquence de journal associé à l'exécution d'une dernière requête analytique précédemment reçue ;
l'accès aux informations de journal correspondant aux transactions de modification après ledit point de synchronisation ;
la mise à jour de ladite pluralité de vecteurs d'attributs sur la base desdites informations de journal correspondant aux transactions de modification après ledit point de synchronisation ; et
l'établissement dudit point de synchronisation pour ledit au moins un vecteur d'attribut dans ladite base de données de stockage en colonnes pour correspondre à ladite requête analytique.

11. Procédé selon la revendication 7, comprenant en outre :
le stockage des transactions de modification dans ledit sous-ensemble de transactions de modification dans une mémoire tampon ;
la détermination du fait que ladite mémoire tampon a atteint un seuil d'espace mémoire utilisé ;
la mise à jour d'au moins un vecteur d'attribut dans ladite base de données de stockage en colonnes sur la base desdites informations de journal commençant à partir d'un point de synchronisation, ledit point de synchronisation pour ledit au moins un vecteur d'attribut dans ladite base de données de stockage en colonnes correspondant à un numéro de séquence de journal associé à l'exécution d'une dernière requête analytique précédemment reçue ;
la définition dudit point de synchronisation pour ledit au moins un vecteur d'attribut dans ladite base de données de stockage en colonnes pour correspondre à ladite requête analytique ; et
l'effacement de ladite mémoire tampon.

12. Procédé selon la revendication 7, comprenant en outre :
lorsque ledit attribut ne correspond à aucun vecteur d'attribut dans ladite base de données de stockage en colonnes, la création d'un second vecteur d'attribut correspondant audit attribut ;
la détermination d'une plage d'attributs interrogée, ladite requête analytique étant dirigée vers ladite plage interrogée ;
et l'importation des attributs dans ladite plage interrogée à partir d'entrées correspondantes dans ladite base de données de stockage en lignes.

13. Procédé selon la revendication 7, dans lequel ladite mise à jour dudit premier vecteur d'attribut comprend :
la mise à jour dudit premier vecteur d'attribut avec une pluralité d'images après dans lesdites informations de journal.

14. Support de stockage non transitoire lisible par ordinateur ayant des instructions exécutables par ordinateur permettant d'amener un système informatique à exécuter le procédé selon l'une quelconque des revendications 7 à 13.
